# EUROPEAN PATENT SPECIFICATION

(11) **EP 4 071 197 B1**
(45) Date of publication and mention of the grant of the patent: **29.01.2025**
(21) Application number: 20896392.6
(22) Date of filing: 27.11.2020
(51) Int. Cl.: C08G 65/336, C09K 3/18

(54) **FLUOROPOLYETHER GROUP-CONTAINING POLYMER, SURFACE TREATMENT AGENT, AND ARTICLE**
FLUORPOLYETHERGRUPPENHALTIGES POLYMER, OBERFLÄCHENBEHANDLUNGSMITTEL UND ARTIKEL
POLYMÈRE CONTENANT UN GROUPE FLUOROPOLYÉTHER, AGENT DE TRAITEMENT DE SURFACE ET ARTICLE

(30) Priority: 03.12.2019 JP 2019218980
(43) Date of publication of application: 12.10.2022
(73) Proprietor: Shin-Etsu Chemical Co., Ltd., Tokyo 100-0005 (JP)
(72) Inventor: SAKOH, Ryusuke, Annaka-shi, Gunma 379-0224 (JP); YAMANE, Yuji, Annaka-shi, Gunma 379-0224 (JP)
(74) Representative: Ter Meer Steinmeister & Partner
(86) International application number: PCT/JP2020/044129
(87) International publication number: WO 2021/111992

(56) References cited:
- WO-A1-2017/104249
- WO-A1-2017/141707
- WO-A1-2017/212850
- WO-A1-2018/216404
- WO-A1-2019/069642

## Description

### TECHNICAL FIELD

This invention relates to a fluoropolyether-containing polymer (or compound having a mono- or divalent fluorooxyalkylene-containing polymer residue in the molecule), and more particularly, to a fluoropolyether-containing polymer capable of forming a coating having improved water/oil repellency and abrasion resistance, a surface treating agent comprising the polymer and/or a partial (hydrolytic) condensate thereof, and an article having a surface treated with the surface treating agent.

### BACKGROUND ART

Recently, there is an accelerating demand to mount touch panels as the screen on mobile phones and other displays. While the touch panel has a screen kept bare, there are many chances of the finger or cheek coming in direct contact with the screen. Undesirably the touch panel is readily fouled with stains like sebum. There is an annually increasing need for the technology to attain fingerprint proofness or easy stain removal on a display surface for better appearance or visibility. It is thus desired to have a material capable of meeting these requirements. In particular, for touch panel displays which are readily stained with fingerprints, it is desirable to form a water/oil repellent layer on their surface. Prior art water/oil repellent layers have high water/oil repellency and easy stain wipe-off, but suffer from the problem that the anti-fouling performance deteriorates during service.

Generally, fluoropolyether-containing compounds exhibit, by virtue of their extremely low surface free energy, water/oil repellency, chemical resistance, lubricity, parting, anti-fouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically hydrolyzable silyl such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of glass or metal, whereby the coating becomes a tough coating having durability.

Patent Documents 1 to 6 (JP-A 2008-534696, JP-A 2008-537557, JP-A 2012-072272, JP-A 2012-157856, JP-A 2013-136833, JP-A 2015-199906) disclose a composition comprising a fluoropolyether-containing polymer which is obtained by introducing a hydrolyzable silyl group into a fluoropolyether-containing compound, the composition being tightly adherent to the substrate surface and capable of forming a coating with water/oil repellency, chemical resistance, lubricity, parting, anti-fouling and other properties on the substrate surface. WO2017/212850A1 and WO2018/216404A1 disclose as well fluoropolyethers comprising organosilicon group.

When lenses and antireflective films are surface treated with a composition comprising the fluoropolyether-containing polymer obtained by introducing a hydrolyzable silyl group into a fluoropolyether-containing compound, the cured coatings are improved in durability to abrasion with steel wool, but have poor abrasion durability to eraser, or do not have sufficient abrasion durability.

### PRIOR ART DOCUMENTS

### PATENT DOCUMENTS

Patent Document 1: JP-T 2008-534696
Patent Document 2: JP-T 2008-537557
Patent Document 3: JP-A 2012-072272
Patent Document 4: JP-A 2012-157856
Patent Document 5: JP-A 2013-136833
Patent Document 6: JP-A 2015-199906

### SUMMARY OF INVENTION

### TECHNICAL PROBLEM

An object of the invention, which has been made under the above-mentioned circumstances, is to provide a fluoropolyether-containing polymer capable of forming a cured coating having improved water/oil repellency and abrasion resistance, a surface treating agent comprising the polymer and/or a partial (hydrolytic) condensate thereof, and an article having a surface treated with the surface treating agent.

### SOLUTION TO PROBLEM

Making extensive investigations to attain the above object, the inventors have found that among the foregoing fluoropolyether-containing polymers, a fluoropolyether-containing polymer having a hydroxy-containing silyl group or hydrolyzable silyl group, represented by the general formula (1), shown below, is effective in that a surface treating agent comprising the polymer and/or a partial (hydrolytic) condensate thereof is capable of forming a cured coating having improved water/oil repellency and eraser abrasion resistance. The present invention is predicated on this finding.

Accordingly, the invention provides a fluoropolyether-containing polymer (or compound having a mono- or divalent fluorooxyalkylene-containing polymer residue in the molecule), a surface treating agent, and an article as defined below.
[1] A fluoropolyether-containing polymer having the following general formula (1): 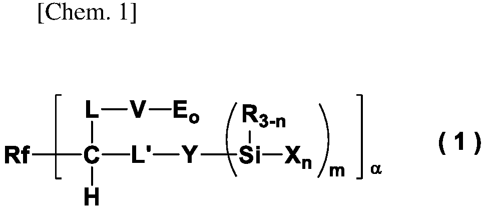 wherein Rf is a mono- or divalent fluorooxyalkylene-containing polymer residue, L is independently a divalent heteroatom, L' is independently a single bond or divalent heteroatom, Y is independently a di- to hexavalent hydrocarbon group which may contain at least one selected from an oxygen atom, a silicon atom and a siloxane bond, R is independently C₁-C₄ alkyl or phenyl, X is independently a hydroxy or hydrolyzable group, or a group having the following general formula (2): 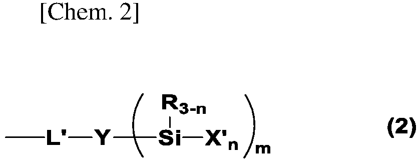 wherein n is independently an integer of 1 to 3 for each silicon atom, m is independently an integer of 1 to 5, X' is a hydroxyl or hydrolyzable group, V is independently a single bond or a di- to hexavalent group selected from a silalkylene group, a silarylene group, di- to hexavalent linear organopolysiloxane residues of 2 to 10 silicon atoms or di- to hexavalent branched or cyclic organopolysiloxane residues of 3 to 10 silicon atoms, E is independently a monovalent polyether group, o is independently an integer of 1 to 5, and α is 1 or 2.
[2] The fluoropolyether-containing polymer according to [1] wherein α in formula (1) is 1, and Rf is a group having the following general formula (3): 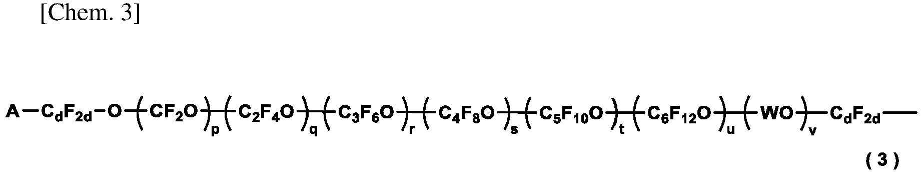 wherein A is fluorine, hydrogen, or fluoroalkyl group terminated with a -CF₃ group, W is independently a fluoroalkylene group containing at least one hydrogen atom, d is each independently an integer of 1 to 3, p, q, r, s, t, u and v each are an integer of 0 to 200, p+q+r+s+t+u+v is 3 to 200, each of the units associated with p, q, r, s, t, u and v may be linear or branched, and individual repeating units within the parentheses with p, q, r, s, t, u and v may be randomly bonded.
[3] The fluoropolyether-containing polymer of [1] wherein α in formula (1) is 2, and Rf is a group having the following general formula (4): 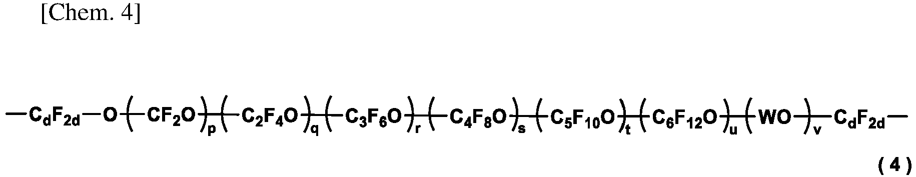 wherein W is independently a fluoroalkylene group containing at least one hydrogen atom, d is each independently an integer of 1 to 3, p, q, r, s, t, u and v each are an integer of 0 to 200, p+q+r+s+t+u+v is 3 to 200, each of the units associated with p, q, r, s, t, u and v may be linear or branched, and individual repeating units within the parentheses with p, q, r, s, t, u and v may be randomly bonded.
[4] The fluoropolyether-containing polymer of any one of [1] to [3] wherein in formula (1), Y is a group selected from the group consisting of a C₃-C₁₀ alkylene group, an alkylene group containing C₆-C₈ arylene, a divalent group having alkylene moieties bonded via a silalkylene structure or silarylene structure, a di- to tetravalent group having a C₂-C₁₀ alkylene moiety bonded to the valence bond of a di- to tetravalent linear organopolysiloxane residue of 2 to 10 silicon atoms or a di- to tetravalent group having a C₂-C₁₀ alkylene moiety bonded to the valence bond of a di- to tetravalent branched or cyclic organopolysiloxane residue of 3 to 10 silicon atoms.
[5] The fluoropolyether-containing polymer of any one of [1] to [4] wherein E in formula (1) is a group having the following general formula (5): 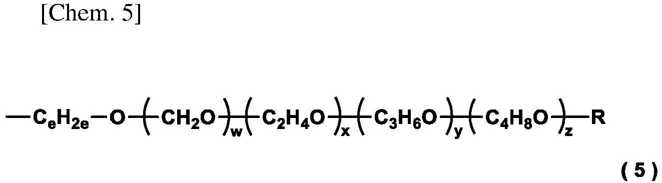 wherein R is C₁-C₄ alkyl or phenyl, e is an integer of 1 to 4, w, x, y and z each are an integer of 0 to 30, w+x+y+z is 1 to 50, each of the units associated with w, x, y and z may be linear or branched, and individual repeating units within the parentheses with w, x, y and z may be randomly bonded.
[6] The fluoropolyether-containing polymer of any one of [1] to [5] wherein in formula (1), X is each independently selected from the group consisting of hydroxy, C₁-C₁₀ alkoxy group, C₂-C₁₀ alkoxyalkoxy group, C₁-C₁₀ acyloxy group, C₂-C₁₀ alkenyloxy group, and halogen.
[7] The fluoropolyether-containing polymer of any one of [1] to [6] wherein the polymer represented by formula (1) is selected from those polymers having the following formulae: 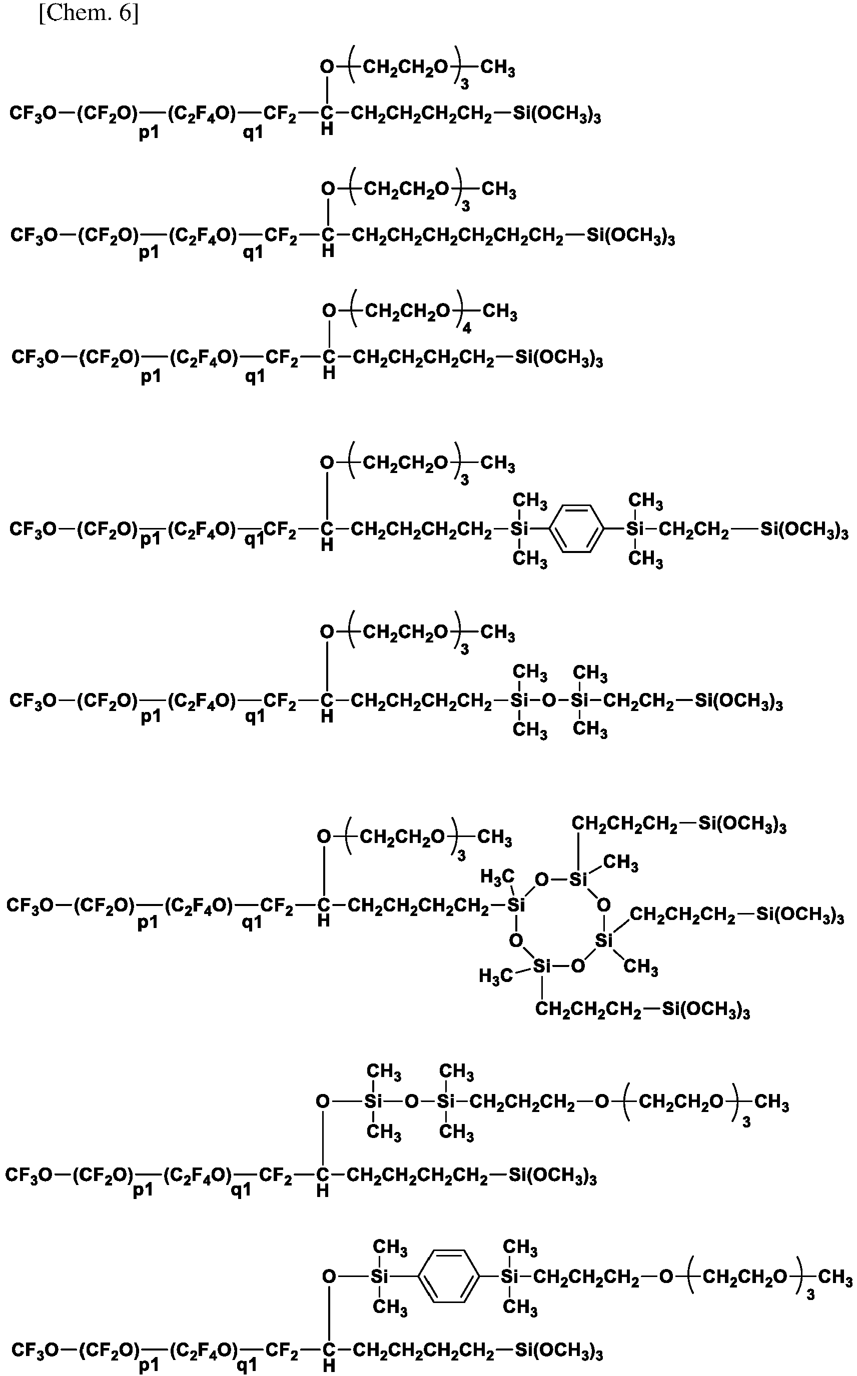 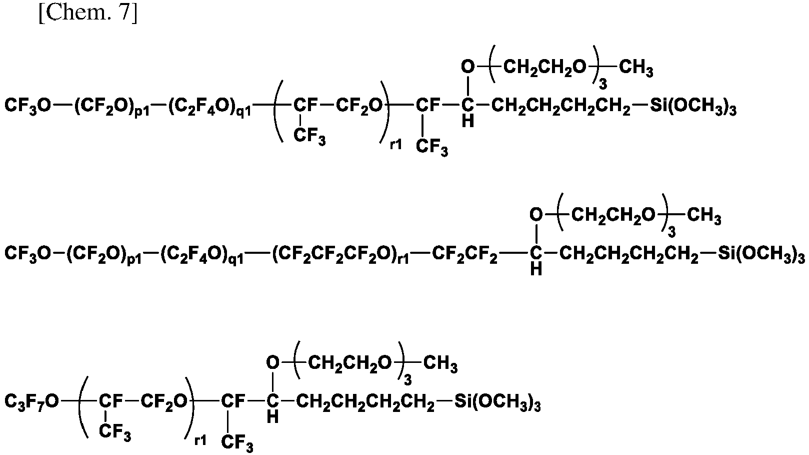 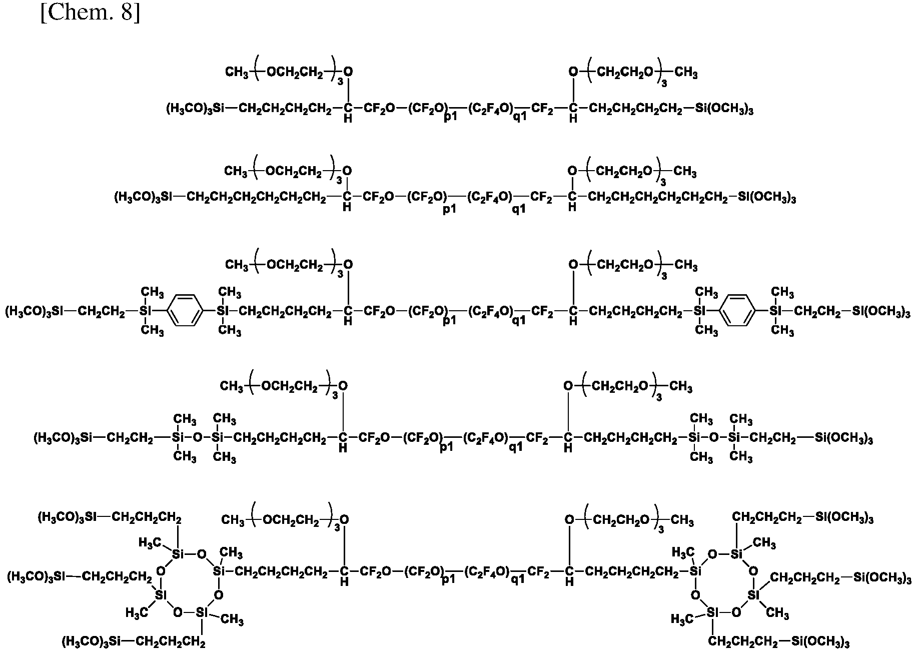 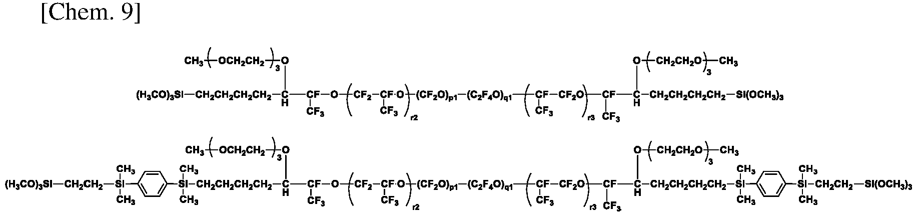 wherein p1 is an integer of 5 to 100, q1 is an integer of 5 to 100, r1 is an integer of 1 to 100, r2 is an integer of 1 to 99, r3 is an integer of 1 to 99, the sum of p1, q1, r1, r2 and r3 is an integer of 10 to 110, and individual repeating units within the parentheses with p1, q1, r1, r2, and r3 may be randomly bonded.
[8] A surface treating agent comprising the fluoropolyether-containing polymer of any one of [1] to [7] and/or a partial (hydrolytic) condensate thereof.
[9] The surface treating agent of [8] wherein the fluoropolyether group in the fluoropolyether-containing polymer is a monovalent fluorooxyalkylene-containing polymer residue at an end of the molecular chain.
[10] An article having a surface treated with the surface treating agent of [8] or [9].

### ADVANTAGEOUS EFFECTS OF INVENTION

The fluoropolyether-containing polymer of the invention is improved in substrate adhesion and wettability. An article which is surface treated with a surface treating agent comprising the polymer and/or a partial (hydrolytic) condensate thereof is improved in water/oil repellency and eraser abrasion resistance.

### DESCRIPTION OF EMBODIMENTS

The invention provides a fluoropolyether-containing polymer having a fluoropolyether group and a reactive functional group and further having a polyether group in the molecule, represented by the general formula (1). The fluoropolyether-containing polymer may be used alone or in admixture of two or more. 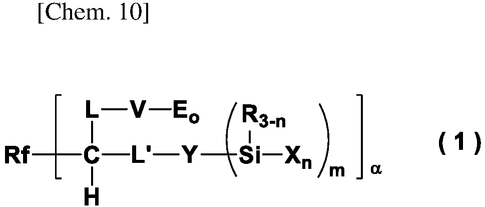 wherein Rf is a mono- or divalent fluorooxyalkylene-containing polymer residue, L is independently a divalent heteroatom, L' is independently a single bond or divalent heteroatom, Y is independently a di- to hexavalent hydrocarbon group which may contain at least one selected from an oxygen atom, a silicon atom and a siloxane bond, R is independently C₁-C₄ alkyl or phenyl, X is independently a hydroxy or hydrolyzable group, or a group represented by the following general formula (2): 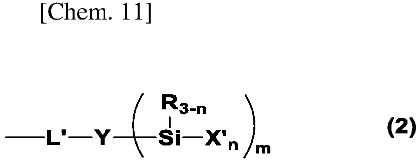 wherein n is independently an integer of 1 to 3 for each silicon atom, m is independently an integer of 1 to 5, X' is a hydroxyl or hydrolyzable group, V is independently a single bond or a di- to hexavalent group selected from a silalkylene group, a silarylene group, di- to hexavalent linear organopolysiloxane residues of 2 to 10 silicon atoms or di- to hexavalent branched or cyclic organopolysiloxane residues of 3 to 10 silicon atoms, E is independently a monovalent polyether group, o is independently an integer of 1 to 5, and α is 1 or 2.

As used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 3 equivalents" implies a range from 2.5 equivalents to 3.4 equivalents, and "about 0.02 equivalent" implies a range from 0.015 equivalent to 0.024 equivalent. When the lowest digit of the numerical value described is "0", the term "about (a value)" includes a numerical value range in which the numerical value described is reached by counting fractions of the lowest digit over 1/2 as one and disregarding the rest. For example, "about 50°C" implies a range from 45°C to 54°C.

The fluoropolyether-containing polymer of the invention is of the structure that a monovalent fluorooxyalkyl or divalent fluorooxyalkylene group (i.e., mono- or divalent fluorooxyalkylene-containing polymer residue) and a hydrolyzable silyl group such as alkoxysilyl or hydroxy-containing silyl group are bonded via a linking group, and has at least one hydrolyzable silyl group such as alkoxysilyl or hydroxy containing silyl groups in the molecule, and the fluoropolyether-containing polymer has a polyether group at a branched chain terminal other than the hydrolyzable silyl group or the hydroxyl group-containing silyl group. Because of this structure, the polymer is improved in substrate adhesion and wettability and exhibits excellent water/oil repellency and eraser abrasion resistance.

In formula (1), Rf is a mono- or divalent fluorooxyalkylene-containing polymer residue, which is preferably a monovalent fluoropolyether group having the following general formula (3) when α is 1 (i.e., Rf is a monovalent fluorooxyalkylene-containing polymer residue), or a divalent fluoropolyether group having the following general formula (4) when α is 2 (i.e., Rf is a divalent fluorooxyalkylene-containing polymer residue). 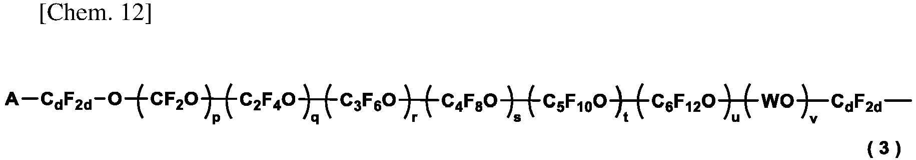 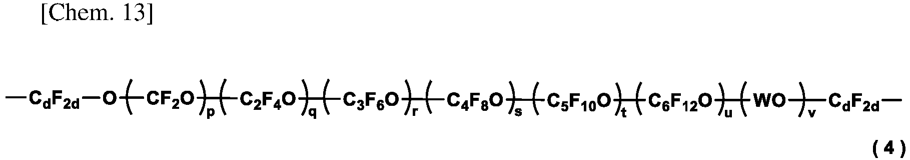 wherein A is fluorine, hydrogen, or fluoroalkyl group terminated with a -CF₃ group, W is independently a fluoroalkylene group containing at least one hydrogen atom, d is each independently an integer of 1 to 3, p, q, r, s, t, u and v each are an integer of 0 to 200, p+q+r+s+t+u+v is 3 to 200, each of the units associated with p, q, r, s, t, u and v may be linear or branched, and individual repeating units within the parentheses with p, q, r, s, t, u and v may be randomly bonded.

In formula (3), A is fluorine, hydrogen, or fluoroalkyl group terminated with a -CF₃ group, preferably fluorine.

In formulae (3) and (4), W is a fluoroalkylene group containing at least one hydrogen atom, examples of which include perfluoroalkylene groups such as CF₂, C₂F₄, C₃F₆, C₄F₈, C₅F₁₀ and C₆F₁₂ units in which one or two fluorine atoms are substituted by hydrogen.

In formulae (3) and (4), d is independently for each unit an integer of 1 to 3, preferably 1 or 2.

Also, p, q, r, s, t, u and v each are an integer of 0 to 200, preferably p is an integer of 5 to 100, q is an integer of 5 to 100, r is an integer of 0 to 100, s is an integer of 0 to 100, t is an integer of 0 to 100, u is an integer of 0 to 100, v is an integer of 0 to 100, p+q+r+s+t+u+v is 3 to 200, preferably 10 to 110, p+q is an integer of 10 to 105, especially preferably 15 to 60, and r=s=t=u=v=0. When p+q+r+s+t+u+v is not more than the upper limit, adhesion and curability are satisfactory, and when the same is not less than the lower limit, the characteristics of fluoropolyether group can be fully developed.

In formulae (3) and (4), each unit may be linear or branched. Also, individual repeating units within the parentheses with p, q, r, s, t, u and v may be randomly bonded.

Examples of Rf are shown below. 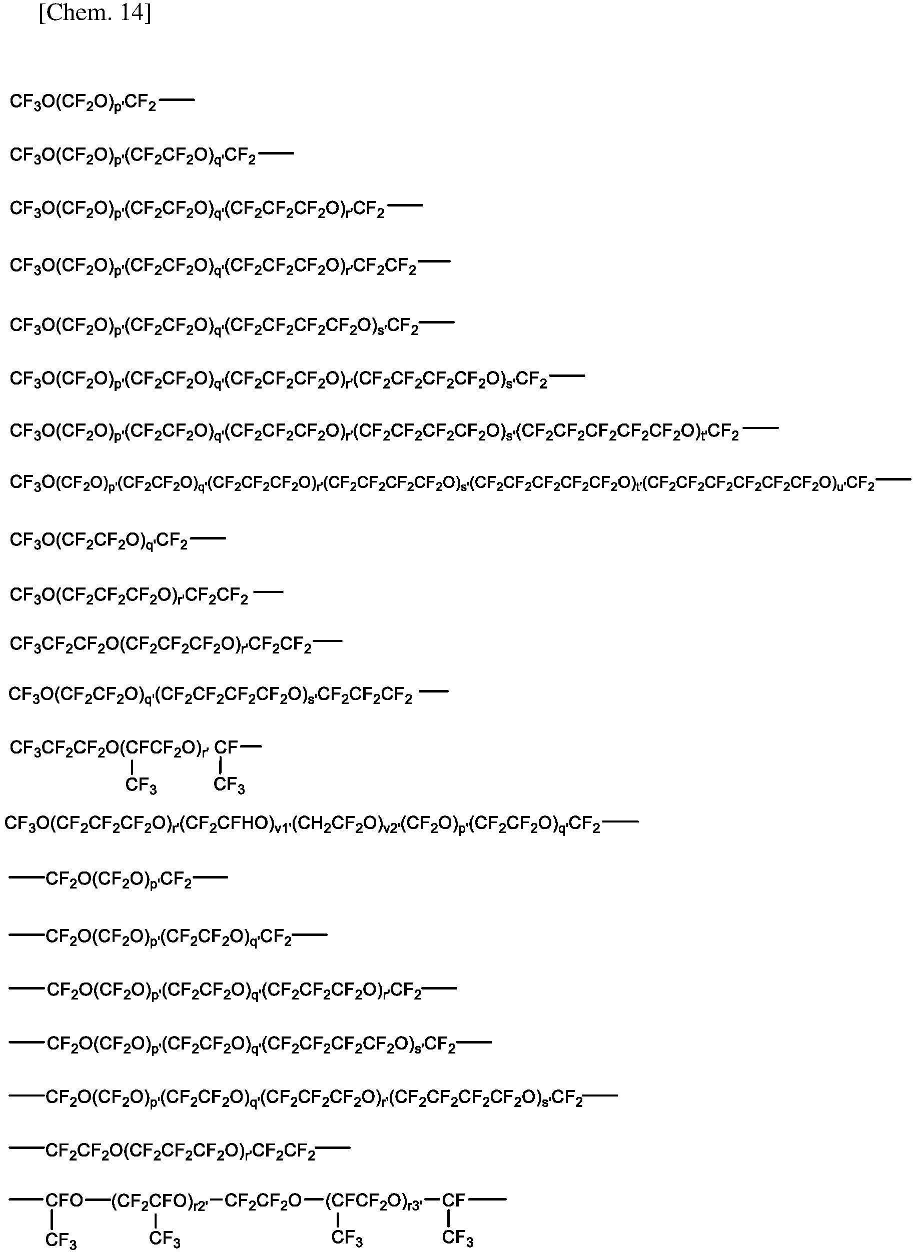 Herein p', q', r', s', t' and u' each are an integer of at least 1, their upper limit is the same as the upper limit of p, q, r, s, t and u, v1' and v2' each are an integer of at least 1, and the upper limit of the sum of v1' and v2' is the same as the upper limit of v, and the sum of p', q', r', s', t', u', v1' and v2' is 3 to 200; r2' and r3' each are an integer of at least 1, and the sum of r2' and r3' is 2 to 199. Also, individual repeating units within the parentheses with p', q', r', s', t', u', v1' and v2' may be randomly bonded.

In formula (1), L is independently a divalent heteroatom, L' is independently a single bond or divalent heteroatom. Exemplary of the divalent heteroatom are oxygen, nitrogen and sulfur. L is preferably an oxygen atom, and L' is preferably a single bond or oxygen, more preferably a single bond.

In formula (1), Y is independently a di- to hexavalent, preferably di- to tetravalent, more preferably divalent hydrocarbon group, which may contain at least one selected from an oxygen atom, a silicon atom, and a siloxane bond.

Specifically, Y is a C₃-C₁₀ alkylene group such as propylene, butylene or hexamethylene, an alkylene group containing C₆-C₈ arylene like phenylene (e.g., alkylene arylene groups of 8 to 16 carbon atoms), a divalent group having alkylene moieties bonded via an oxygen atom, a divalent group having alkylene moieties bonded via a silalkylene structure or silarylene structure, or a di- to hexavalent group having a C₂-C₁₀ alkylene moiety bonded to the valence bond of a di- to hexavalent linear organopolysiloxane residues of 2 to 10 silicon atoms, preferably 2 to 5 or a di- to hexavalent branched or cyclic organopolysiloxane residue of 3 to 10 silicon atoms, preferably 3 to 5 silicon atoms; preferably a C₃-C₁₀ alkylene group, an alkylene group containing phenylene, a divalent group having alkylene moieties bonded via a silalkylene or silarylene structure, a di- to tetravalent group having a C₂-C₁₀ alkylene moiety bonded to the valence bond of a di- to tetravalent linear organopolysiloxane residue of 2 to 10 silicon atoms, or a di- to tetravalent group having a C₂-C₁₀ alkylene moiety bonded to the valence bond of a di- to tetravalent branched or cyclic organopolysiloxane residue of 3 to 10 silicon atoms; most preferably a C₃-C₆ alkylene group.

The silalkylene or silarylene structure is exemplified by the following structure. 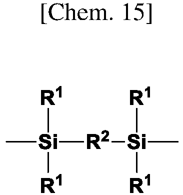 Herein R¹ which may be the same or different is a C₁-C₄ alkyl group such as methyl, ethyl, propyl or butyl, or a C₆-C₁₀ aryl group such as phenyl. R² is a C₁-C₄ alkylene group such as methylene, ethylene or propylene (trimethylene, methylethylene), or a C₆-C₁₀ arylene group such as phenylene.

Examples of a di- to hexavalent linear organopolysiloxane residues of 2 to 10 silicon atoms, preferably 2 to 5 silicon atoms or a di- to hexavalent branched or cyclic organopolysiloxane residue of 3 to 10 silicon atoms, preferably 3 to 5 silicon atoms are shown below. 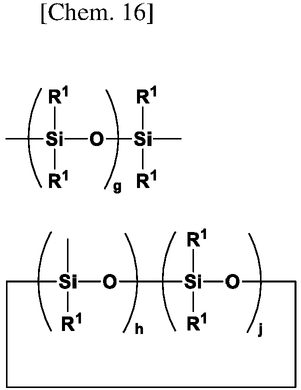 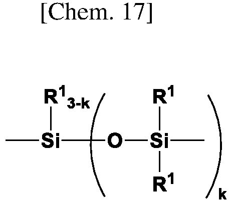 Herein,R¹ is as defined above, g is an integer of 1 to 9, preferably 1 to 4, h is an integer of 2 to 6, preferably 2 to 4, j is an integer of 0 to 8, preferably 0 or 1, h+j is an integer of 3 to 10, preferably 3 to 5, and k is an integer of 1 to 3, preferably 2 or 3.

Exemplary of Y are groups as shown below. 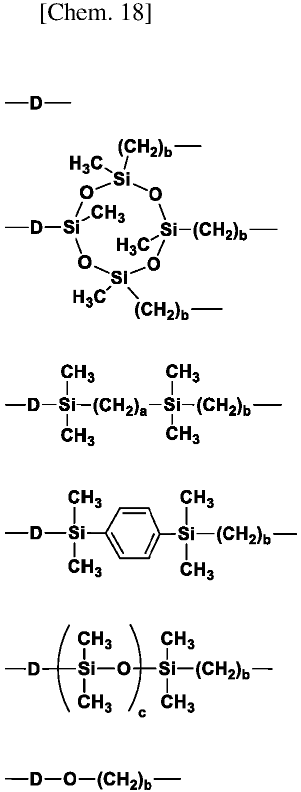 Herein D is a C₂-C₁₆ divalent organic group which may be fluorinated, "a" is an integer of 1 to 4, b is independently an integer of 2 to 10, and c is an integer of 1 to 9.

Here, D is a C₂-C₁₆, preferably C₂-C₈ divalent organic group which may be fluorinated, desirably a C₂-C₁₆, more desirably C₂-C₈ divalent hydrocarbon group which may be fluorinated. Examples of the divalent hydrocarbon group include alkylene groups such as methylene, ethylene, propylene (trimethylene, methylethylene), butylene (tetramethylene, methylpropylene), hexamethylene, and octamethylene, arylene groups such as phenylene, or combinations of at least two of the foregoing (e.g., alkylene arylene groups), and substituted forms of the foregoing in which some or all of the hydrogen atoms are substituted by fluorine atoms. D is preferably ethylene, propylene, butylene, hexamethylene or phenylene.

The subscript "a" is an integer of 1 to 4, preferably 1 to 3, b is independently an integer of 2 to 10, preferably 2 to 6, and c is an integer of 1 to 9, preferably 1 to 4.

Illustrative examples of Y include the following groups.

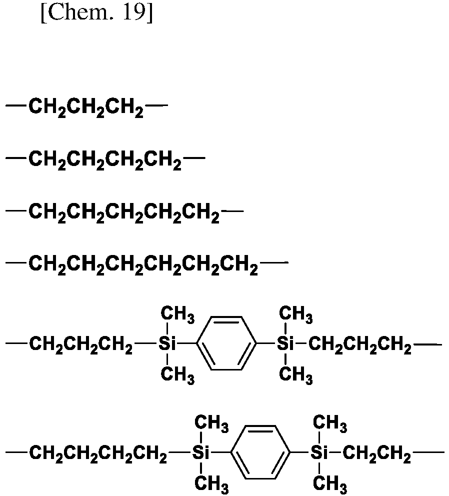

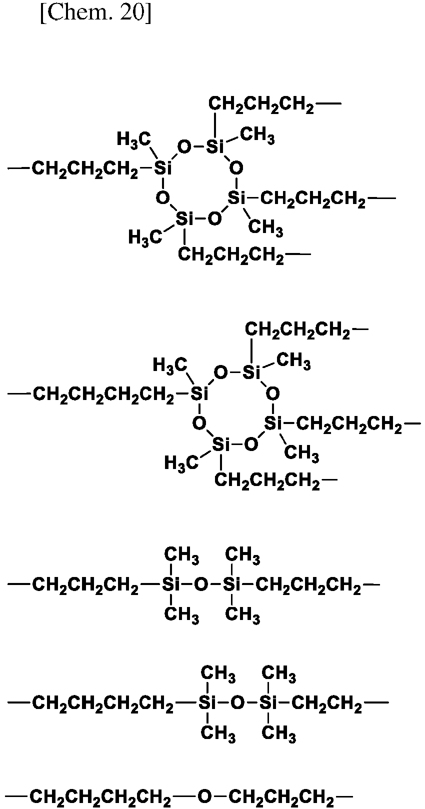

In formula (1), m is an integer of 1 to 5. If m is less than 1, substrate adhesion is low. If m is 6 or more, a terminal alkoxy value becomes too high and adversely affects performance. Preferably m is an integer of 1 to 3, most preferably 1.

In formula (1), R is independently a C₁-C₄ alkyl group such as methyl, ethyl, propyl or butyl, or a phenyl group. Inter alia, methyl is preferred.

In addition, n is independently an integer of 1 to 3, preferably 2 or 3, and n is most preferably 3 from the standpoints of reactivity and substrate adhesion.

In formula (1), X is independently a hydroxy or hydrolyzable group, or a group represented by the following general formula (2): 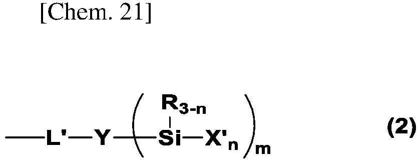 wherein L', Y, R, m and n are as defined above, and X' is a hydroxyl or hydrolyzable group.

Exemplary hydrolyzable groups include C₁-C₁₀ alkoxy groups such as methoxy, ethoxy, propoxy, isopropoxy, and butoxy, C₂-C₁₀ alkoxylalkoxy groups such as methoxymethoxy and methoxyethoxy, C₁-C₁₀ acyloxy groups such as acetoxy, C₂-C₁₀ alkenyloxy groups such as isopropenoxy, and halogen groups such as chloro, bromo or iodo.

Inter alia, methoxy, ethoxy, isopropenoxy and chloro are preferred as the hydrolyzable group.

In formula (2), X' is a hydroxyl or hydrolyzable group, and exemplary hydrolyzable groups include the same groups as those described above.

Examples of the group represented by formula (2) include the following groups.

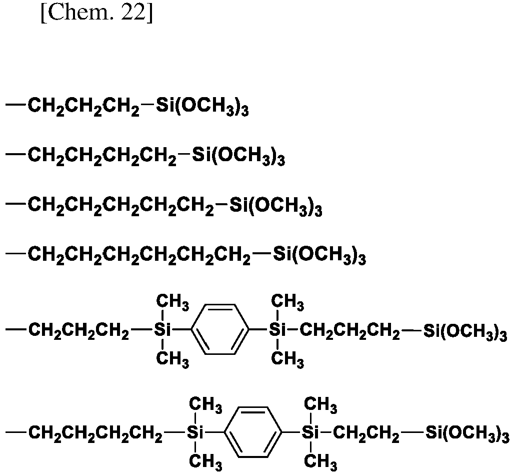

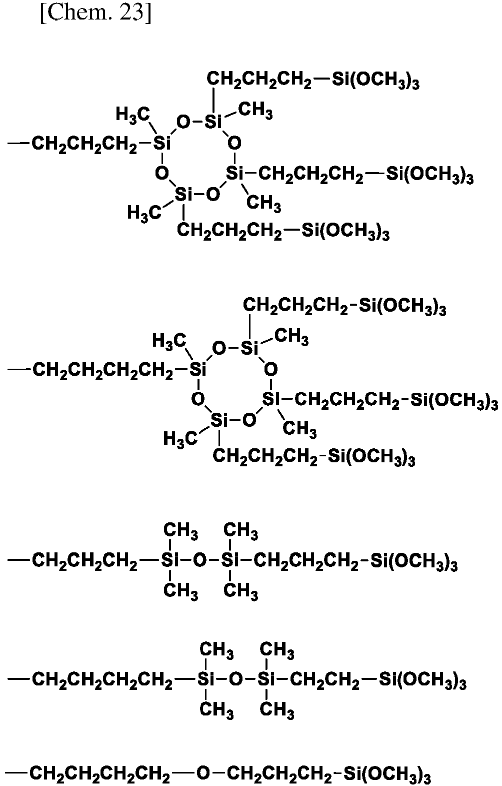

Inter alia, methoxy, ethoxy, isopropenoxy and chloro are preferred as X.

In formula (1), V is independently a single bond or a di- to hexavalent group selected from a silalkylene group, a silarylene group, di- to hexavalent linear organopolysiloxane residues of 2 to 10 silicon atoms or di- to hexavalent branched or cyclic organopolysiloxane residues of 3 to 10 silicon atoms.

Here, exemplary silalkylene group and silarylene group may include those similar to the silalkylene structure and the silarylene structure exemplified for Y.

In addition, exemplary di- to hexavalent linear organopolysiloxane residues of 2 to 10 silicon atoms or di- to hexavalent branched or cyclic organopolysiloxane residues of 3 to 10 silicon atoms include those similar to the di- to hexavalent organopolysiloxane residues exemplified for Y.

Examples of the di- to hexavalent group selected from a silalkylene group, a silarylene group, di- to hexavalent linear organopolysiloxane residues of 2 to 10 silicon atoms or di- to hexavalent branched or cyclic organopolysiloxane residues of 3 to 10 silicon atoms of V include groups represented by the following formula. 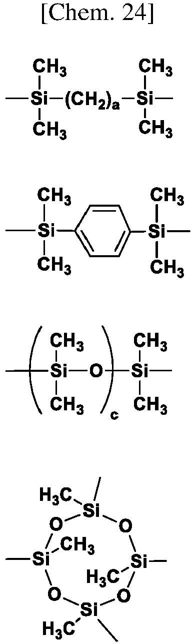 Herein a and c are as defined above.

V is preferably a single bond, a silarylene group, or a divalent linear organopolysiloxane residue of 2 to 10 silicon atoms.

In formula (1), E is independently a monovalent polyether group, preferably has a repeating unit of a C₁-C₄ oxyalkylene group, and more preferably is a group represented by the following general formula (5): 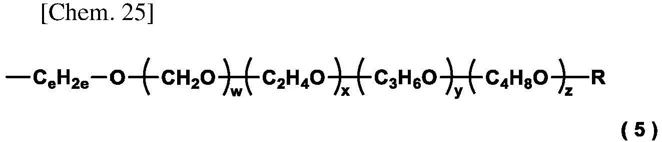 wherein R is as defined above, e is an integer of 1 to 4, w, x, y and z each are an integer of 0 to 30, w+x+y+z is 1 to 50, each of the units associated with w, x, y and z may be linear or branched, and individual repeating units within the parentheses with w, x, y and z may be randomly bonded.

In formula (5), R is as defined above, and is C₁-C₄ alkyl or phenyl, preferably methyl.

In formula (5), e is an integer of 1 to 4, preferably an integer of 1 to 3, more preferably 2 or 3. In addition, w, x, y and z are each an integer of 0 to 30, preferably, w is an integer of 0 to 15, x is an integer of 1 to 15, y is an integer of 0 to 15, and z is an integer of 0 to 15, and w+x+y+z is 1 to 50, preferably 2 to 30, more preferably x is 2 to 15, and w=y=z=0. When w+x+y+z is not more than the upper limit value, the characteristics of polyether group can be fully developed, and when w+x+y+z is not less than the lower limit value, eraser abrasion resistance can be fully developed.

In formula (5), each unit may be linear or branched. In addition, individual repeating units within the parentheses with w, x, y and z may be randomly bonded.

Illustrative examples of E include the following groups.

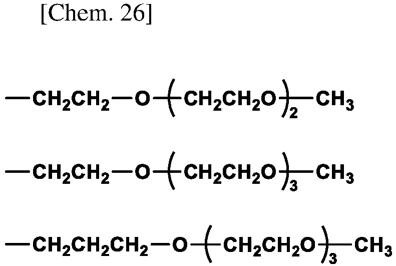

Examples of the fluoropolyether-containing polymer represented by formula (1) include those polymers of the following formulae. In each formula, the number of repetition (or degree of polymerization) of repeating units that constitute the fluorooxyalkyl group or fluorooxyalkylene group (mono- or divalent fluorooxyalkylene-containing polymer residue) is shown below, although it may be an arbitrary number that satisfies formulae (3) and (4). 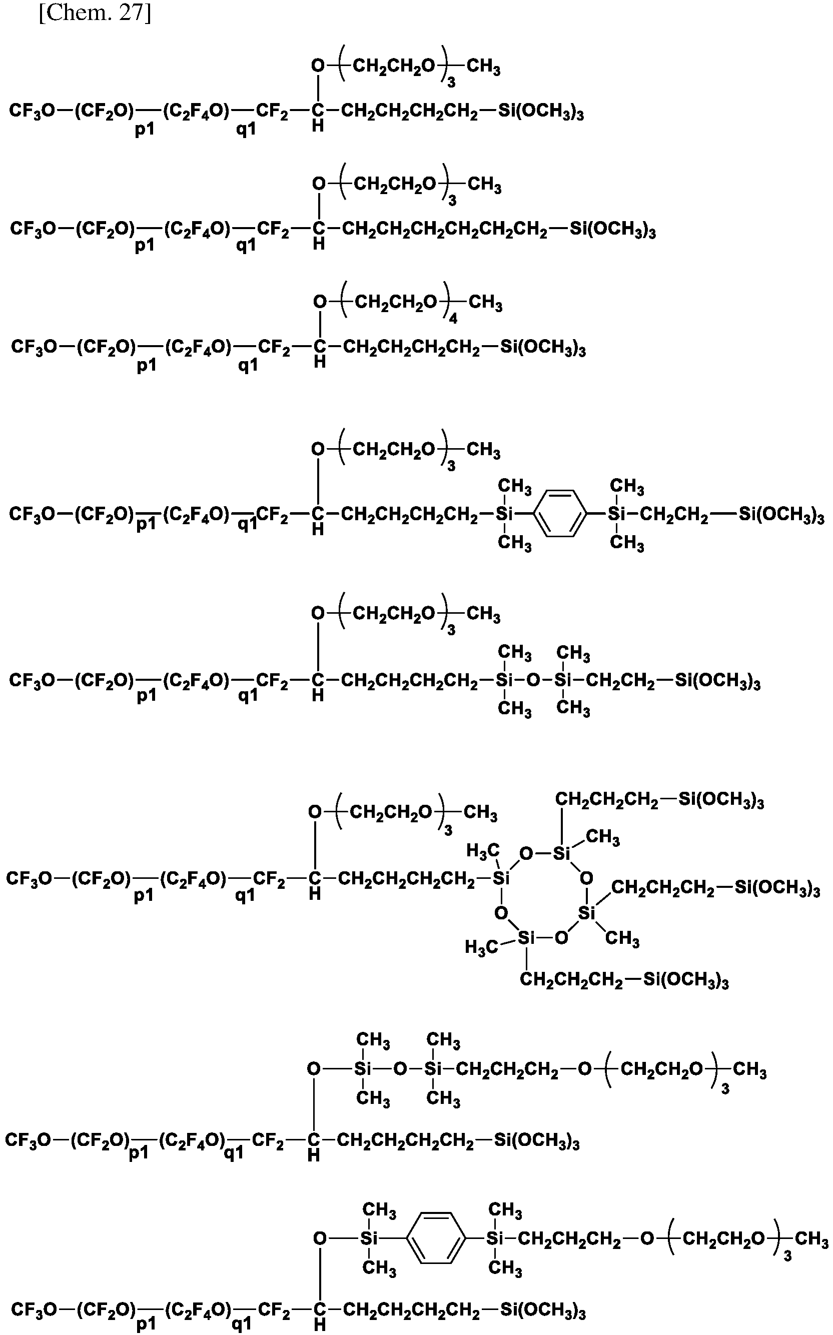 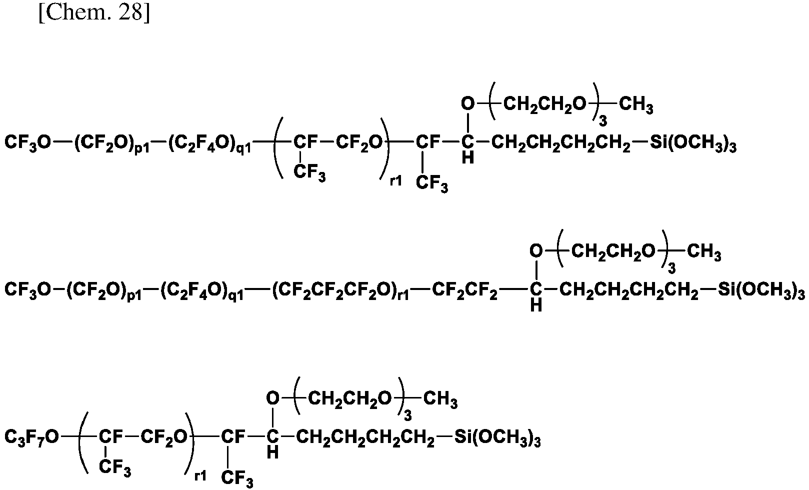 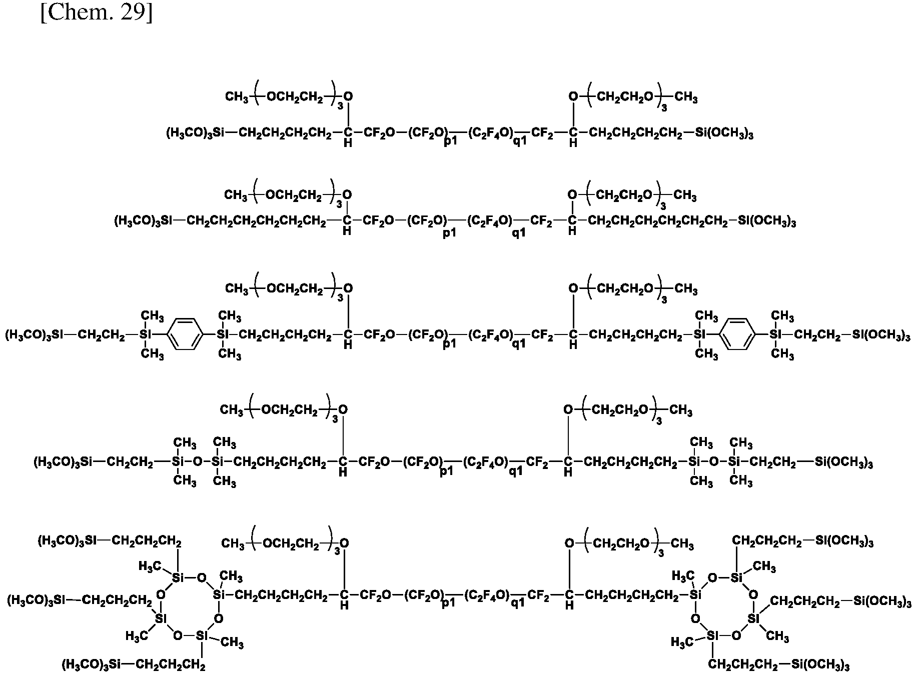 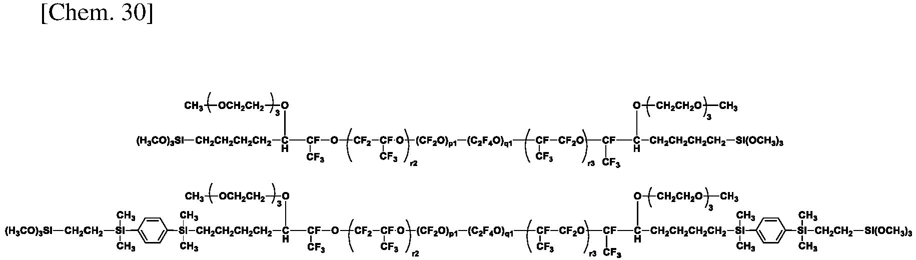 Herein p1 is an integer of 5 to 100, q1 is an integer of 5 to 100, r1 is an integer of 1 to 100, r2 is an integer of 1 to 99, r3 is an integer of 1 to 99, the sum of p1, q1, r1, r2 and r3 (e.g., p1+q1, p1+q1+r1, or p1+q1+r2+r3) is an integer of 10 to 110. Individual repeating units within the parentheses with p1, q1, r1, r2, and r3 may be randomly bonded.

The fluoropolyether-containing polymer represented by formula (1) wherein α=1 (i.e., Rf is a monovalent fluorooxyalkylene-containing polymer residue) or α=2 (i.e., Rf is a divalent fluorooxyalkylene-containing polymer residue) may be prepared, for example, by the following method.

First, a fluoropolyether-containing polymer having a carbonyl group at an end, represented by the general formula (6): 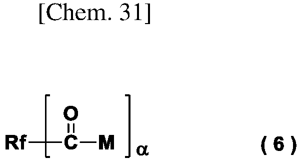 wherein Rf and α are as defined above, and M is an eliminatable monovalent group is reacted with an organic metal reagent having an aliphatic unsaturated double bond (olefin site) at an end and β-hydrogen (i.e., hydrogen atom bonded to the carbon atom at β position relative to metal atom), preferably in the presence of a solvent.

In formula (6), M is an eliminatable monovalent group, for example, hydrogen, halogen, hydroxy, alkoxy, amino, alkylamino, thiol, alkylthio or acyl group.

Exemplary of M are the groups shown below.

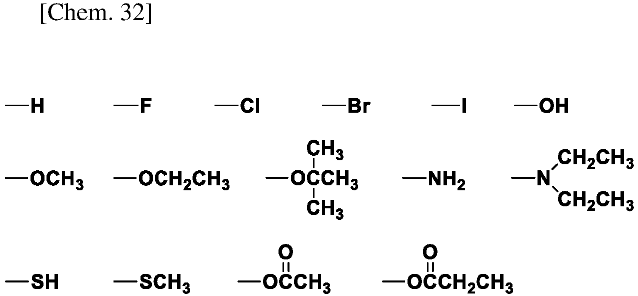

Examples of the fluoropolyether-containing polymer having a carbonyl group at an end, represented by formula (6) are shown below. In each formula, the number of repetition (or degree of polymerization) of repeating units that constitute the fluorooxyalkyl group or fluorooxyalkylene group (mono- or divalent fluorooxyalkylene-containing polymer residue) is shown below, although it may be an arbitrary number that satisfies formulae (3) and (4). 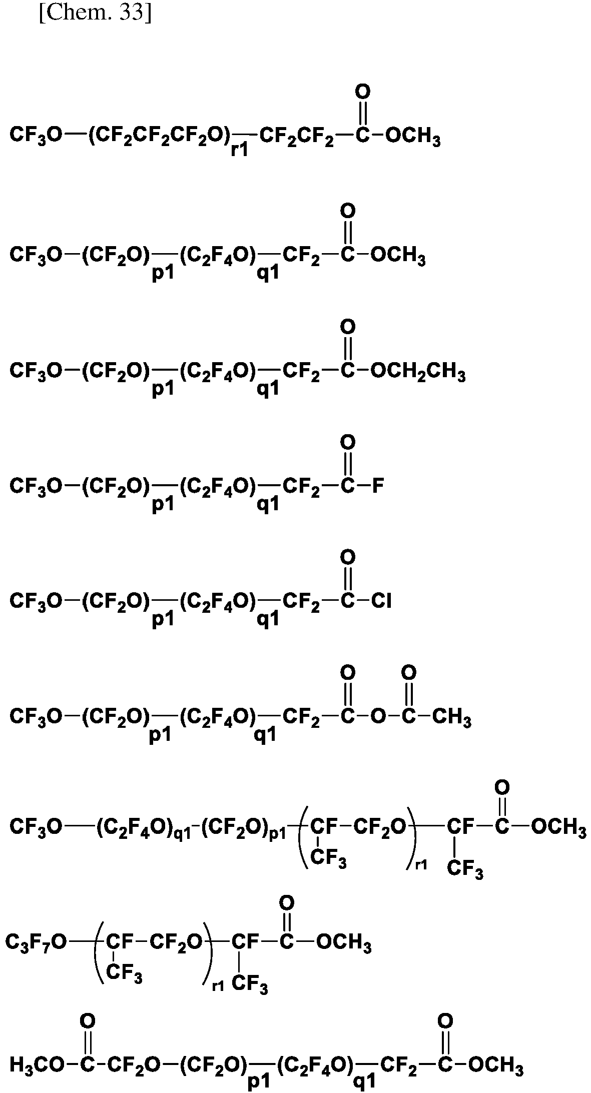 Herein p1, q1 and r1 are as defined above, and the sum of p1, q1 and r1 is an integer of 10 to 110. Individual repeating units within the parentheses with p1, q1 and r1 may be randomly bonded.

Illustrative of the organic metal reagent having an aliphatic unsaturated double bond at an end and β-hydrogen are organolithium reagents, Grignard reagents, organozinc reagents, organoboron reagents, and organotin reagents. Inter alia, Grignard reagents and organozinc reagents are preferred for ease of handling. The following compounds are preferably used as the organic metal reagent.

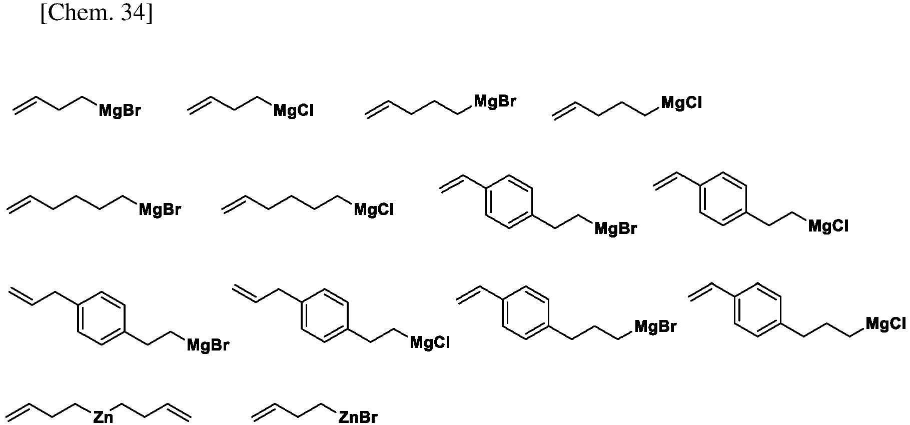

The amount of the organic metal reagent having an aliphatic unsaturated double bond at an end and β-hydrogen is preferably 2 to 5 equivalents, more preferably 2.5 to 3.5 equivalents, most preferably about 3 equivalents per equivalent of reactive end group (eliminatable monovalent group) in the fluoropolyether-containing polymer having a carbonyl group at an end, represented by formula (6).

A solvent may be used in the reaction of the fluoropolyether-containing polymer having a carbonyl group at an end, represented by formula (6) with the organic metal reagent having an aliphatic unsaturated double bond at an end and β-hydrogen. Although the solvent used herein is not particularly limited, a fluorochemical solvent is preferably used because the reactant is a fluorine compound. Suitable fluorochemical solvents include 1,3-bistrifluoromethylbenzene, trifluoromethylbenzene, perfluoro solvents (Asahiklin AC 2000, Asahiklin AC-6000) marketed from AGC Inc., hydrofluoroether (HFE) solvents (NOVEC 7100: C₄F₉OCH₃, NOVEC 7200: C₄F₉OC₂H₅, NOVEC 7300: C₂F₅-CF(OCH₃)-CF(CF₃)₂) marketed from 3M, and perfluoro solvents (PF5080, PF5070, PF5060) marketed from 3M. The fluorochemical solvents may be used alone or in admixture.

Besides the fluorochemical solvent, an organic solvent may also be used as the solvent. Ether solvents such as tetrahydrofuran (THF), monoethylene glycol dimethyl ether, diethylene glycol dimethyl ether, triethylene glycol dimethyl ether, tetraethylene glycol dimethyl ether, and dioxane may be used as the organic solvent. The organic solvent may be used alone or in admixture with the fluorochemical solvent.

The amount of the solvent used is 10 to 600 parts by weight, preferably 50 to 400 parts by weight, more preferably about 200 to 350 parts by weight per 100 parts by weight of the fluoropolyether-containing polymer having a carbonyl group at an end, represented by formula (6).

Conditions for the reaction of the fluoropolyether-containing polymer having a carbonyl group at an end, represented by formula (6) with the organic metal reagent having an aliphatic unsaturated double bond at an end and β-hydrogen include 0 to 80°C, preferably 45 to 70°C, more preferably about 50°C and 1 to 12 hours, preferably 5 to 7 hours.

After the reaction is performed under the above conditions, the reaction is stopped, and the solution is separated into a water layer and a fluorochemical solvent layer by separatory operation. The fluorochemical solvent layer is washed with an organic solvent, after which the solvent is distilled off, obtaining a fluoropolyether-containing polymer having a hydroxy group and an olefin site at an end of the molecular chain, represented by the following formula (7). 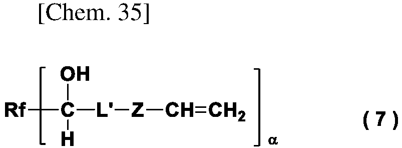 Herein Rf, L' and α are as defined above, and Z is independently a divalent hydrocarbon group which may contain a silicon atom and/or siloxane bond.

In formula (7), Z is independently a divalent hydrocarbon group, preferably of 1 to 20 carbon atoms, more preferably 2 to 12 carbon atoms. Examples thereof include C₁-C₈ alkylene groups such as methylene, ethylene, propylene (trimethylene, methylethylene), butylene (tetramethylene, methylpropylene), hexamethylene, and octamethylene, and alkylene groups containing a C₆-C₈ arylene group such as phenylene (e.g., C₇₋C₉ alkylene arylene groups). Z is preferably a C₁-C₄ straight alkylene group.

Examples of Z include the groups shown below.

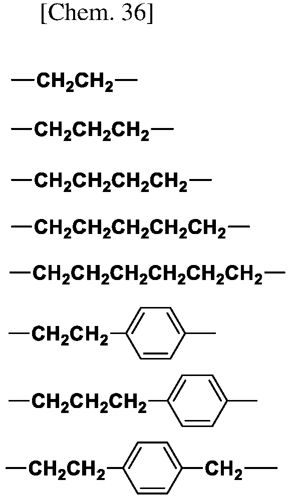

Examples of the fluoropolyether-containing polymer having a hydroxy group and an olefin site at an end of the molecular chain, represented by formula (7), are shown below. In each formula, the number of repetition (or degree of polymerization) of repeating units that constitute the fluorooxyalkyl group or fluorooxyalkylene group (mono- or divalent fluorooxyalkylene-containing polymer residue) is shown below, although it may be an arbitrary number that satisfies formulae (3) and (4). 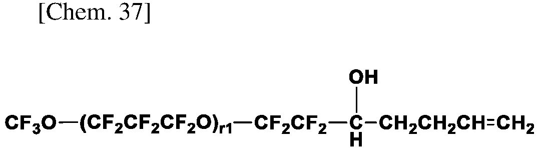 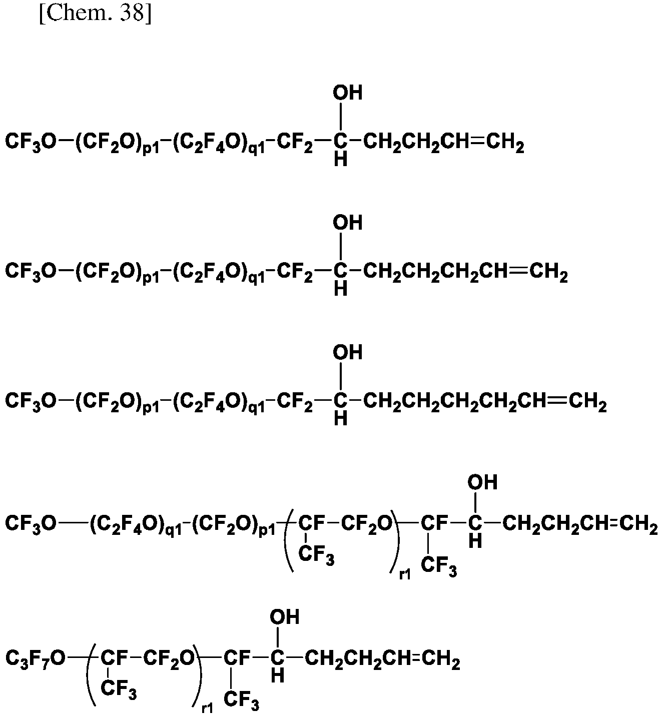 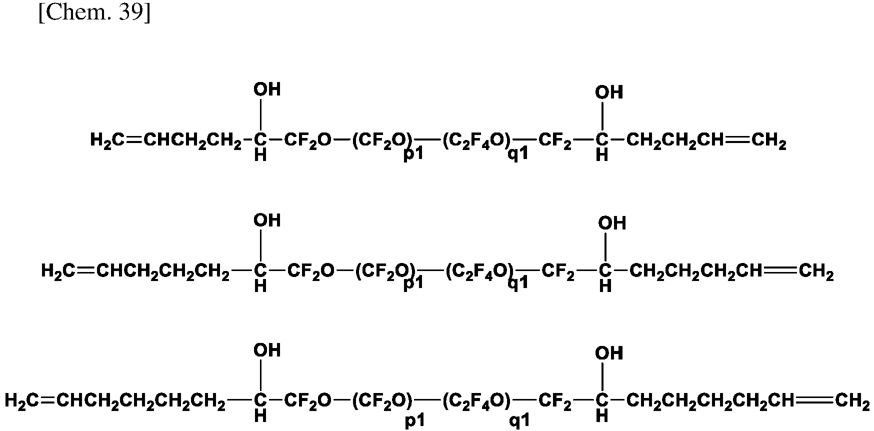 Herein p1, q1 and r1 are as defined above, and the sum of p1, q1 and r1 is an integer of 10 to 110. Individual repeating units within the parentheses with p1, q1 and r1 may be randomly bonded.

Next, the fluoropolyether-containing polymer having a hydroxy group and an olefin site at an end of the molecular chain, represented by formula (7) obtained above, and a polyether group-introducing agent are aged in the presence of a base at a temperature of 0 to 90°C, preferably 40 to 60°C, more preferably about 50°C for 1 to 48 hours, preferably 10 to 40 hours, more preferably about 24 hours, optionally along with an additive for enhancing reactivity and a solvent.

As an alternative method, for example, the fluoropolyether-containing polymer having a hydroxy group and an olefin site at an end of the molecular chain, represented by formula (7) obtained above, with an organosilicon compound having at least two SiH groups and free of a hydrolyzable end group in the molecule are subjected to dehydrogenation in the presence of a dehydrogenation catalyst at a temperature of 0 to 60°C, preferably 15 to 35°C, more preferably about 25°C for 10 minutes to 24 hours, preferably 30 minutes to 2 hours, more preferably about 1 hour, optionally along with a solvent, whereby a fluoropolyether-containing polymer having a SiH group and an olefin site at an end of the molecular chain is obtained.

Subsequently, the fluoropolyether-containing polymer having a SiH group and an olefin site at an end of the molecular chain and a polyether compound having an olefin site in the molecule (for example, a polyalkylene oxide compound blocked with an alkenyloxy group at an end of the molecular chain or the like) are dissolved in a solvent, for example, a fluorochemical solvent such as 1,3-bis(trifluoromethyl)benzene, and aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 72 hours, preferably 20 to 36 hours, more preferably about 24 hours.

As the polyether group-introducing agent to be reacted with the fluoropolyether-containing polymer having a hydroxy group and an olefin site at an end of the molecular chain, represented by formula (7), for example, halides may be used. Suitable halides include 2-bromoethyl methyl ether, ethylene glycol 2-bromoethyl methyl ether, diethylene glycol 2-bromoethyl methyl ether, triethylene glycol 2-bromoethyl methyl ether, and tetraethylene glycol 2-bromoethyl methyl ether.

The amount of the polyether group-introducing agent used is preferably 1 to 15 equivalents, more preferably 3 to 6 equivalents per equivalent of the reactive end group (hydroxy group) in the fluoropolyether-containing polymer having a hydroxy group and an olefin site at an end of the molecular chain, represented by formula (7).

Examples of the base used in the reaction of the fluoropolyether-containing polymer having a hydroxy group and an olefin site at an end of the molecular chain, represented by formula (7) with the polyether group-introducing agent include amines and alkali metal bases. Exemplary amines include triethylamine, diisopropylethylamine, pyridine, DBU, and imidazole. Exemplary alkali metal bases include sodium hydroxide, potassium hydroxide, sodium hydride, potassium hydride, alkyllithium, t-butoxypotassium, lithium diisopropylamide, lithium bis(trimethylsilyl)amide, sodium bis(trimethylsilyl)amide, and potassium bis(trimethylsilyl)amide.

The amount of the base used is 1 to 20 equivalents, more preferably 4 to 8 equivalents, most preferably about 6 equivalents per equivalent of the reactive end group (hydroxy group) in the fluoropolyether-containing polymer having a hydroxy group and an olefin site at an end of the molecular chain, represented by formula (7).

For the reaction of the fluoropolyether-containing polymer having a hydroxy group and an olefin site at an end of the molecular chain, represented by formula (7) with the polyether group-introducing agent, an additive for enhancing reactivity such as tetrabutylammonium halide or alkali metal halide may be used. Exemplary additives include tetrabutylammonium chloride, tetrabutylammonium bromide, tetrabutylammonium iodide, tetrabutylammonium hydrogen sulfate, sodium iodide, potassium iodide, cesium iodide, and crown ethers. In the reaction system, catalytic halogen exchange takes place between the additive and the polyether group-introducing agent to enhance reactivity whereas a crown ether coordinates with the metal to enhance reactivity.

The amount of the additive used is 0.005 to 0.1 equivalent, more preferably 0.01 to 0.05 equivalent, most preferably about 0.02 equivalent per equivalent of the reactive end group (hydroxy group) in the fluoropolyether-containing polymer having a hydroxy group and an olefin site at an end of the molecular chain, represented by formula (7).

A solvent may be used in the reaction of the fluoropolyether-containing polymer having a hydroxy group and an olefin site at an end of the molecular chain, represented by formula (7) with the polyether group-introducing agent, or the reaction of the fluoropolyether-containing polymer having a hydroxy group and an olefin site at an end of the molecular chain, represented by formula (7) with an organosilicon compound having at least two SiH groups and free of a hydrolyzable end group in the molecule. Although the solvent is not essential, a fluorochemical solvent is typically used as the solvent. Suitable fluorochemical solvents include fluorinated aromatic hydrocarbon solvents such as 1,3-bis(trifluoromethyl)benzene and trifluoromethylbenzene, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M). Organic solvents may also be used, for example, dimethylforamide, dimethylacetamide, dimethyl sulfoxide, acetonitrile, and THF.

The amount of the solvent used is 10 to 300 parts by weight, preferably 30 to 150 parts by weight, more preferably about 50 parts by weight per 100 parts by weight of the fluoropolyether-containing polymer having a hydroxy group and an olefin site at an end of the molecular chain, represented by formula (7).

In the reaction of the fluoropolyether-containing polymer having a hydroxyl group and an olefin site at an end of the molecular chain, represented by formula (7) obtained above, with an organosilicon compound having at least two SiH groups and free of a hydrolyzable end group in the molecule, the organosilicon compound having at least two SiH groups and free of a hydrolyzable end group in the molecule is preferably a compound represented by the following formula. 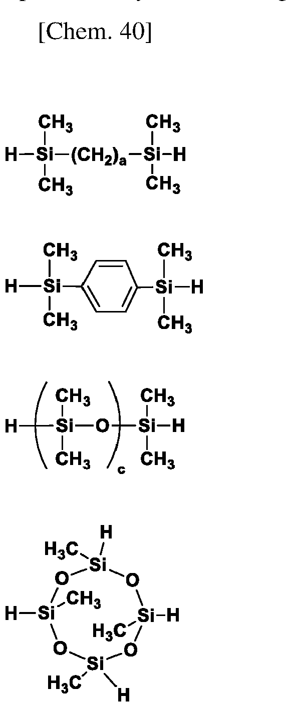 Herein a and c are as defined above.

Examples of the organosilicon compound having at least two SiH groups and free of a hydrolyzable end group in the molecule include those shown below.

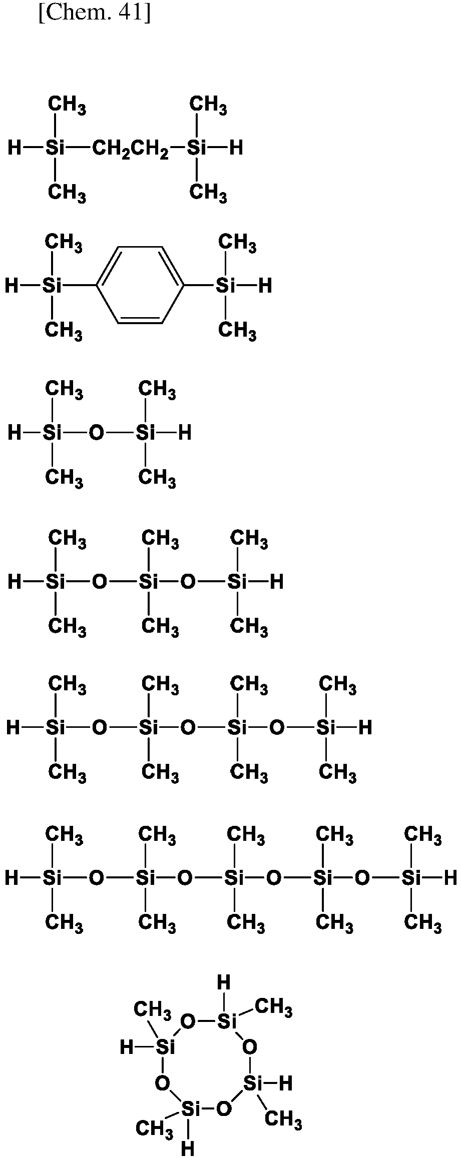

In the reaction of the fluoropolyether-containing polymer having a hydroxyl group and an olefin site at an end of the molecular chain, represented by formula (7) obtained above, with an organosilicon compound having at least two SiH groups and free of a hydrolyzable end group in the molecule, the amount of organosilicon compound having at least two SiH groups and free of a hydrolyzable end group in the molecule used is 7 to 30 equivalents, more preferably 5 to 20 equivalents, most preferably about 10 equivalents per equivalent of the reactive end group in the fluoropolyether-containing polymer having a hydroxyl group and an olefin site at an end of the molecular chain.

Examples of the dehydrogenation catalyst used in the reaction of the fluoropolyether-containing polymer having a hydroxyl group and an olefin site at an end of the molecular chain represented by formula (7) obtained above with the organosilicon compound having at least two SiH groups and free of a hydrolyzable end group in the molecule include platinum group metal based catalysts such as rhodium, palladium and ruthenium, and boron catalysts, and specific examples thereof include platinum group metal based catalysts such as tetrakis(triphenylphosphine)palladium and chlorotris(triphenylphosphine)rhodium, and boron catalysts such as tris(pentafluorophenyl)borane.

The amount of the dehydrogenation catalyst used is 0.01 to 0.0005 equivalents, more preferably 0.007 to 0.001 equivalents, most preferably about 0.005 equivalents per equivalent of the reactive end group in the fluoropolyether-containing polymer having a hydroxyl group and an olefin site at an end of the molecular chain.

Subsequently, the reaction is stopped, and the solution is separated into a water layer and a fluorochemical solvent layer by separatory operation. The fluorochemical solvent layer is washed with an organic solvent, after which the solvent is distilled off, obtaining a fluoropolyether-containing polymer having a SiH group and an olefin site at an end of the molecular chain.

In the reaction of the fluoropolyether-containing polymer having a SiH group and an olefin site at an end of the molecular chain obtained above with a polyether compound having an olefin site in the molecule, examples of the polyether compound having an olefin site in the molecule can include those represented by the following formula: 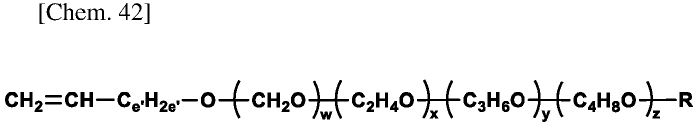 wherein R, w, x, y, z and w+x+y+z are as defined above, and each of the units associated with w, x, y and z may be linear or branched, e' is an integer of 0 to 2, and individual repeating units within the parentheses with w, x, y and z may be randomly bonded.

Specific examples thereof include a polyalkylene oxide compound blocked with an alkenyloxy group at an end of the molecular chain, such as polyethylene oxide in which one end of the molecular chain is blocked with an allyloxy group and the other end is blocked with a methoxy group as shown below. 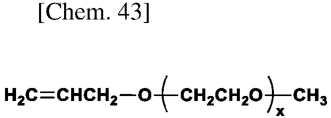 Herein x is as defined above.

Specific examples of the polyether compound having an olefin site in the molecule, such as a polyalkylene oxide compound blocked with an alkenyloxy group at an end of the molecular chain, include UNIOX MA-200, UNIOX MA-300, UNIOX MA-350S, and UNIOX MA-500 manufactured by NOF CORPORATION.

The amount of the polyether compound having an olefin site in the molecule used is 1 to 10 equivalents, more preferably 2 to 5 equivalents, most preferably about 3 equivalents per equivalent of the reactive end group in the fluoropolyether-containing polymer having a SiH group and an olefin site at an end of the molecular chain.

In the reaction of the fluoropolyether-containing polymer having a SiH group and an olefin site at an end of the molecular chain obtained above with a polyether compound having an olefin site in the molecule, examples of the hydrosilylation catalyst include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The hydrosilylation catalyst is used in an amount to provide 0.1 to 100 ppm, more preferably 1 to 50 ppm of transition metal based on the weight of the fluoropolyether-containing polymer having a SiH group and an olefin site at an end of the molecular chain.

The reaction of the fluoropolyether-containing polymer having a hydroxy group and an olefin site at an end of the molecular chain represented by formula (7) with the polyether group-introducing agent or the reaction of the fluoropolyether-containing polymer having a hydroxy group and an olefin site at an end of the molecular chain represented by formula (7) with the organosilicon compound having at least two SiH groups and free of a hydrolyzable end group in the molecule (fluoropolyether-containing polymer having a SiH group and an olefin site at an end of the molecular chain) and the polyether compound having an olefin site in the molecule yields a fluoropolyether-containing polymer having an olefin site and a polyether site at an end of the molecular chain represented by the following formula (8). 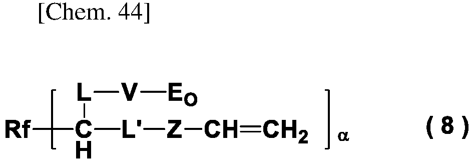 Herein Rf, L, L', V, E, o, Z and α are as defined above.

Preferable examples of the fluoropolyether-containing polymer having an olefin site and a polyether site at an end of the molecular chain, represented by formula (8) are shown below. In each formula, the number of repetition (or degree of polymerization) of repeating units that constitute the fluorooxyalkyl group or fluorooxyalkylene group (mono- or divalent fluorooxyalkylene-containing polymer residue) is shown below, although it may be an arbitrary number that satisfies formulae (3) and (4). 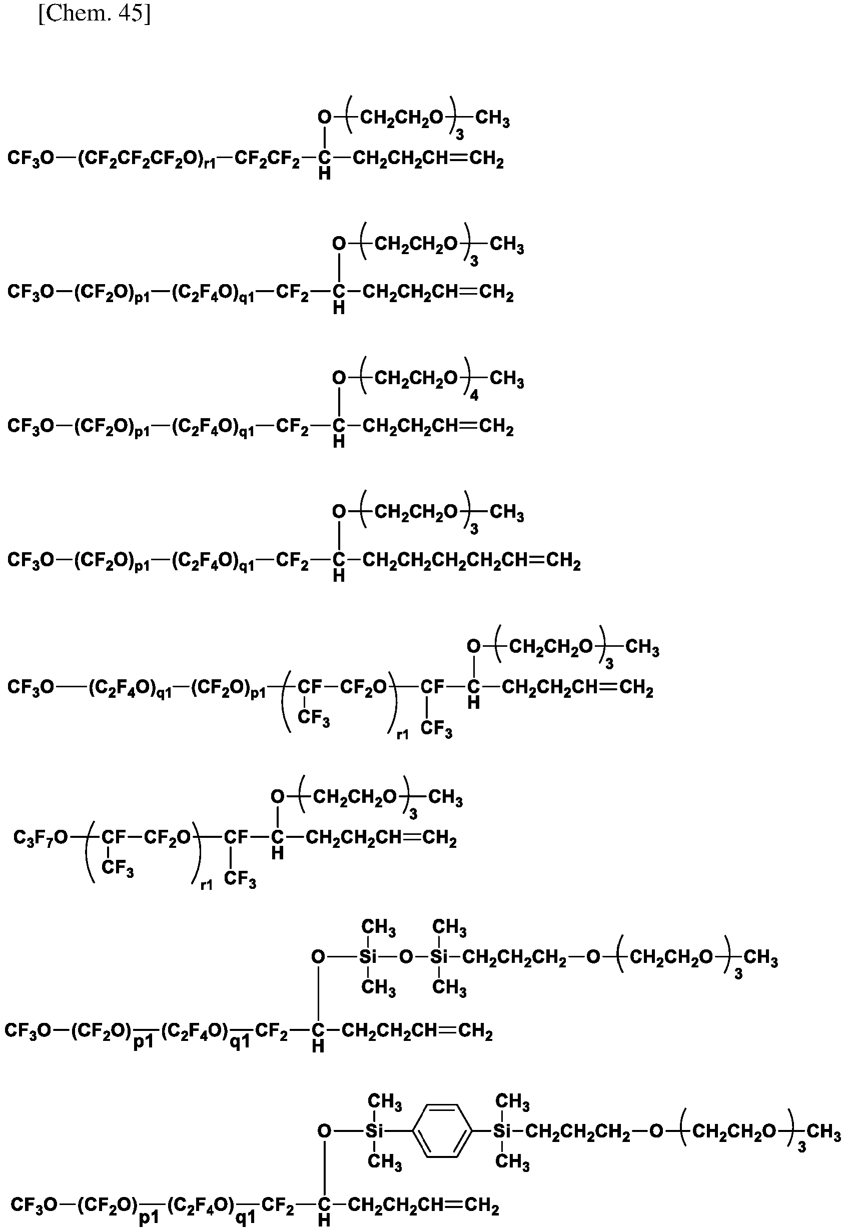 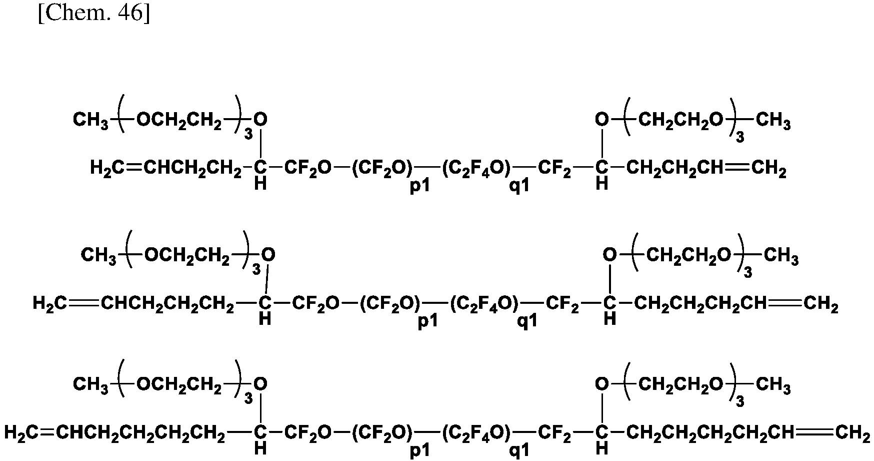 Herein p1, q1 and r1 are as defined above, and the sum of p1, q1 and r1 is an integer of 10 to 110. Individual repeating units within the parentheses with p1, q1 and r1 may be randomly bonded.

Next, the fluoropolyether-containing polymer having an olefin site and a polyether site at an end of the molecular chain, represented by formula (8) is dissolved in a solvent such as fluorochemical solvent, typically 1,3-bis(trifluoromethyl)benzene. An organosilicon compound having a SiH group and a hydrolyzable end group in the molecule such as trimethoxysilane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. There is obtained a fluoropolyether-containing polymer having formula (1).

An alternative method for preparing the fluoropolyether-containing polymer having formula (1) is, for example, the method shown below.

The fluoropolyether-containing polymer having an olefin site and a polyether site at an end of the molecular chain, represented by formula (8) is dissolved in a solvent such as fluorochemical solvent, typically 1,3-bis(trifluoromethyl)benzene. An organosilicon compound having a SiH group and a hydrolyzable end group (halogen) in the molecule such as trichlorosilane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. It is noted that after aging, the substituent (halogen) on the silyl group may be converted to, for example, a methoxy group.

It is noted that an organosilicon compound having a SiH group and free of a hydrolyzable end group in the molecule may be used instead of the organosilicon compound having a SiH group and a hydrolyzable end group in the molecule. In this embodiment, an organosilicon compound having at least two SiH groups and free of a hydrolyzable end group in the molecule is used. After the fluoropolyether-containing polymer having an olefin site and a polyether site at an end of the molecular chain, represented by formula (8) is reacted with the organosilicon compound having at least two SiH groups and free of a hydrolyzable end group in the molecule as in the above embodiment, the reaction product having SiH groups at a polymer end is mixed with an organosilicon compound having an olefin site and a hydrolyzable end group in the molecule, such as allyltrimethoxysilane. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours.

As the organosilicon compound having a SiH group and a hydrolyzable end group in the molecule used in the preparation of the fluoropolyether-containing polymer having formula (1), compounds having the general formulae (9a) to (9d) are preferred. 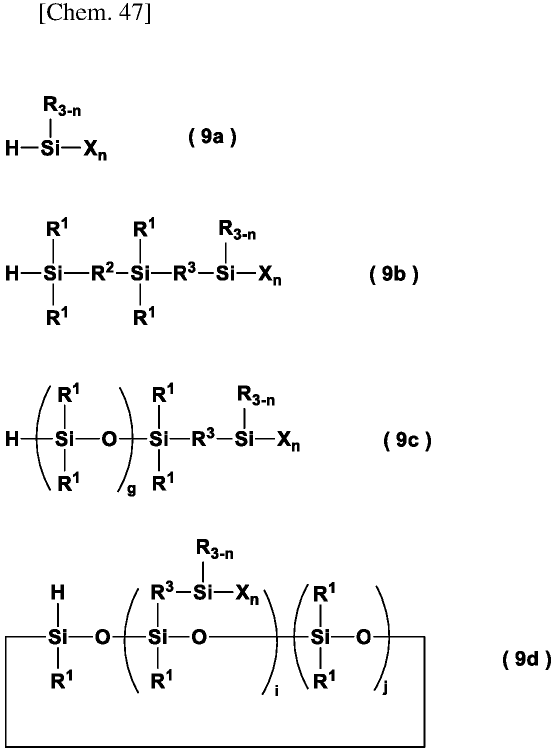 Herein R, X, n, R¹, R², g and j are as defined above, i is an integer of 1 to 5, preferably 1 to 3, i+j is an integer of 2 to 9, preferably 2 to 4, and R³ is a C₂-C₈ divalent hydrocarbon group.

R³ is a C₂-C₈, preferably C₂-C₄ divalent hydrocarbon group, examples of which include alkylene groups such as methylene, ethylene, propylene (trimethylene, methylethylene), butylene (tetramethylene, methylpropylene), hexamethylene, and octamethylene, arylene groups such as phenylene, or combinations of at least two of the foregoing (e.g., alkylene-arylene groups). Inter alia, ethylene and trimethylene are preferred.

Examples of the organosilicon compound having a SiH group and a hydrolyzable end group in the molecule include trimethoxysilane, triethoxysilane, tripropoxysilane, triisopropoxysilane, tributoxysilane, triisopropenoxysilane, triacetoxysilane, trichlorosilane, tribromosilane, and triiodosilane as well as the silane compounds shown below.

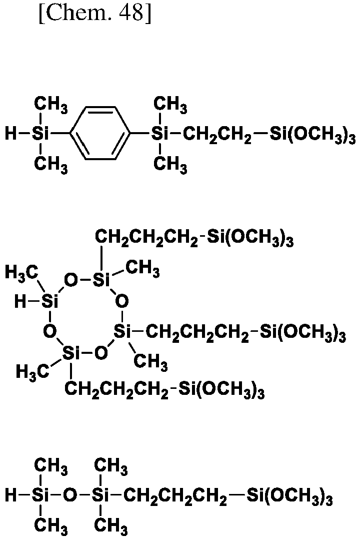

In the embodiment wherein the preparation of the fluoropolyether-containing polymer having formula (1) involves the addition reaction of the fluoropolyether-containing polymer having an olefin site and a polyether site at an end of the molecular chain, represented by formula (8) to the organosilicon compound having a SiH group and a hydrolyzable end group in the molecule, the organosilicon compound having a SiH group and a hydrolyzable end group in the molecule is preferably used in such an amount as to provide 1.5 to 4 equivalents, more preferably 2 to 2.5 equivalents of SiH group in the organosilicon compound per equivalent of reactive end group (terminal olefin site) in the fluoropolyether-containing polymer having an olefin site and a polyether site at an end of the molecular chain, represented by formula (8).

As the organosilicon compound having at least two SiH groups and free of a hydrolyzable end group in the molecule used in the preparation of the fluoropolyether-containing polymer having formula (1), compounds having the general formulae (10a) to (10c) are preferred. 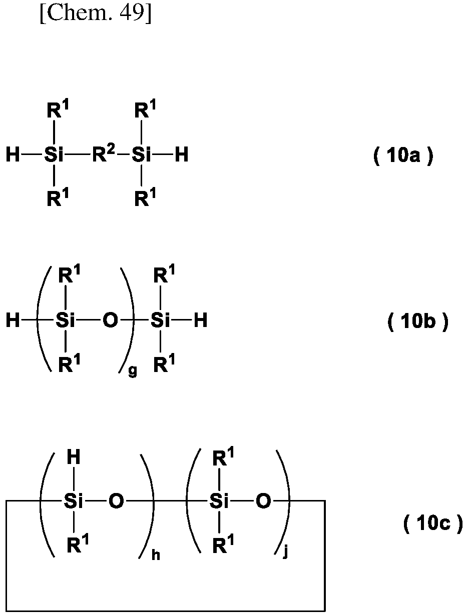 Herein R¹, R², g, h, j and h+j are as defined above.

Examples of the organosilicon compound having at least two SiH groups and free of a hydrolyzable end group in the molecule include those shown below.

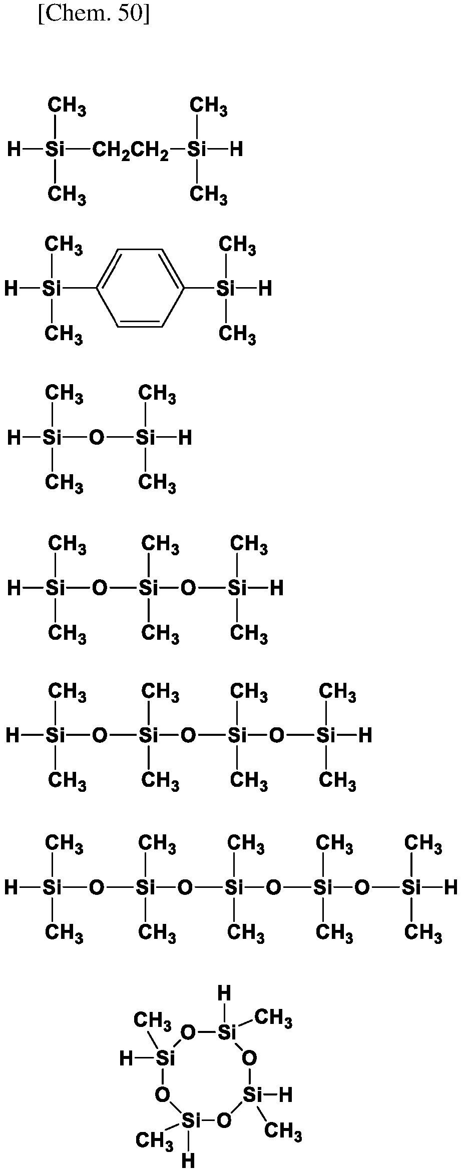

In the embodiment wherein the preparation of the fluoropolyether-containing polymer having formula (1) involves the addition reaction of the fluoropolyether-containing polymer having an olefin site and a polyether site at an end of the molecular chain, represented by formula (8) to the organosilicon compound having at least two SiH groups and free of a hydrolyzable end group in the molecule, the organosilicon compound having at least two SiH groups and free of a hydrolyzable end group in the molecule is preferably used in such an amount as to provide 5 to 30 equivalents, more preferably 7 to 20 equivalents, most preferably about 10 equivalents of SiH group in the organosilicon compound per equivalent of reactive end group (terminal olefin site) in the fluoropolyether-containing polymer having an olefin site and a polyether site at an end of the molecular chain, represented by formula (8).

In the preparation of the fluoropolyether-containing polymer having formula (1), examples of the addition reaction product of the fluoropolyether-containing polymer having an olefin site and a polyether site at an end of the molecular chain, represented by formula (8) with the organosilicon compound having at least two SiH groups and free of a hydrolyzable end group in the molecule include those of the following formulae. In each formula, the number of repetition (or degree of polymerization) of repeating units that constitute the fluorooxyalkyl group or fluorooxyalkylene group (mono- or divalent fluorooxyalkylene-containing polymer residue) is shown below, although it may be an arbitrary number that satisfies formulae (3) and (4). 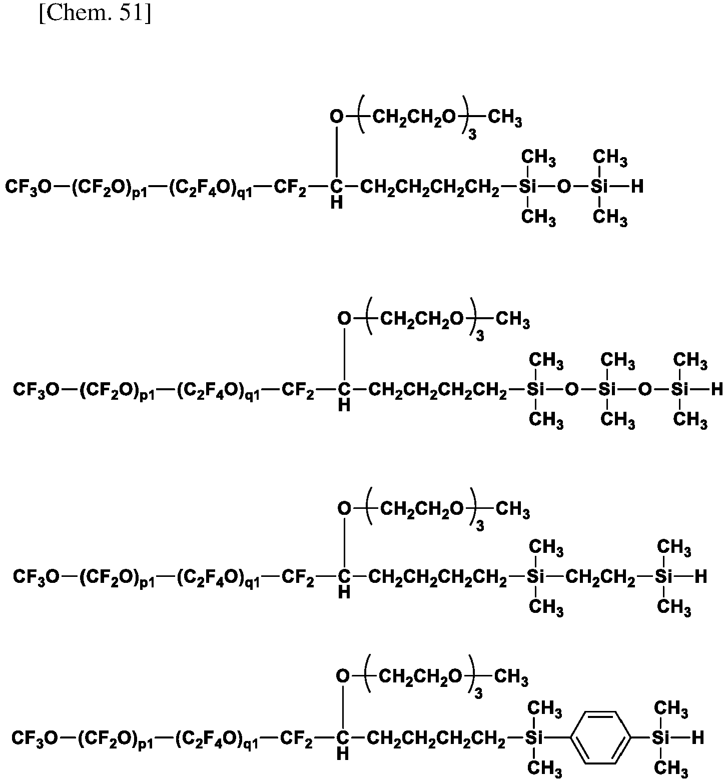 Herein p1 and q1 are as defined above, the sum of p1 and q1 is an integer of 10 to 110. Individual repeating units within the parentheses with p1 and q1 may be randomly bonded.

In the preparation of the fluoropolyether-containing polymer having formula (1), compounds having the general formula (11) are preferred as the organosilicon compound having an olefin site and a hydrolyzable end group in the molecule to be reacted with SiH groups at a polymer end of the addition reaction product. 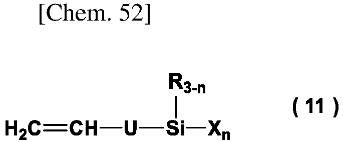 Herein R, X and n are as defined above. U is a single bond or a C₁-C₆ divalent hydrocarbon group.

In formula (11), U is a single bond or a C₁-C₆ divalent hydrocarbon group. Examples of the C₁-C₆ divalent hydrocarbon group include alkylene groups such as methylene, ethylene, propylene (trimethylene, methylethylene), butylene (tetramethylene, methylpropylene), and hexamethylene, and phenylene. U is preferably a single bond or methylene.

Examples of the organosilicon compound having an olefin site and a hydrolyzable end group in the molecule include compounds as shown below.

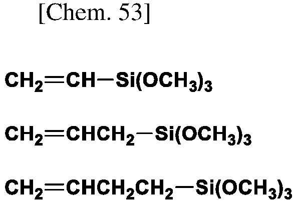

In the embodiment wherein the preparation of the fluoropolyether-containing polymer having formula (1) involves the reaction of the addition reaction product between the fluoropolyether-containing polymer having an olefin site and a polyether site at an end of the molecular chain, represented by formula (8) with the organosilicon compound having at least two SiH groups and free of a hydrolyzable end group in the molecule, with the organosilicon compound having an olefin site and a hydrolyzable end group in the molecule, the organosilicon compound having an olefin site and a hydrolyzable end group in the molecule is preferably used in such an amount as to provide 1.5 to 4 equivalents, more preferably 2 to 2.5 equivalents of olefin site in the organosilicon compound having an olefin site and a hydrolyzable end group in the molecule per equivalent of reactive end group (terminal SiH group) in the addition reaction product between the fluoropolyether-containing polymer having an olefin site and a polyether site at an end of the molecular chain, represented by formula (8) and the organosilicon compound having at least two SiH groups and free of a hydrolyzable end group in the molecule.

As the solvent used in the preparation of the fluoropolyether-containing polymer having formula (1), fluorochemical solvents are preferred. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 150 parts by weight, more preferably about 100 parts by weight per 100 parts by weight of the fluoropolyether-containing polymer having an olefin site and a polyether site at an end of the molecular chain, represented by formula (8).

Examples of the hydrosilylation catalyst used in the preparation of the fluoropolyether-containing polymer having formula (1) include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The hydrosilylation catalyst is preferably used in an amount to provide 0.01 to 100 ppm, more preferably 0.1 to 50 ppm of transition metal based on the weight of the fluoropolyether-containing polymer having an olefin site and a polyether site at an end of the molecular chain, represented by formula (8) or the reaction product of this polymer with the organosilicon compound having at least two SiH groups and free of a hydrolyzable end group in the molecule.

Thereafter, the solvent and unreacted reactants are distilled off in vacuum, yielding the target compound.

In one example, when the fluoropolyether-containing polymer having an olefin site and a polyether site at an end of the molecular chain, represented by formula (8) is a compound having the following formula: 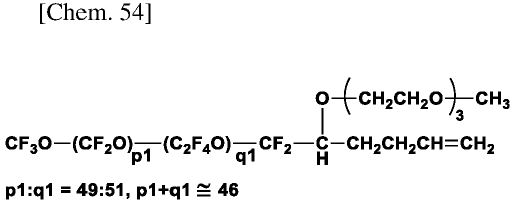 and the organosilicon compound having a SiH group and a hydrolyzable end group in the molecule is trimethoxysilane, a compound of the following formula is obtained.

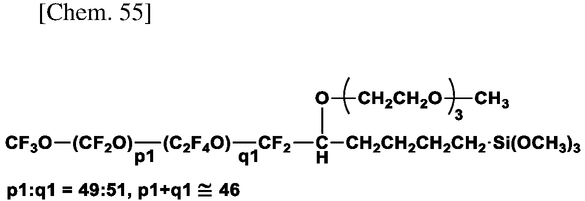

In another example, when the fluoropolyether-containing polymer having an olefin site and a polyether site at an end of the molecular chain, represented by formula (8) is a compound having the following formula: 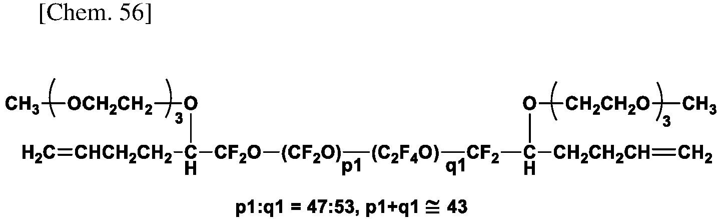 and the organosilicon compound having a SiH group and a hydrolyzable end group in the molecule is trimethoxysilane, a compound of the following formula is obtained.

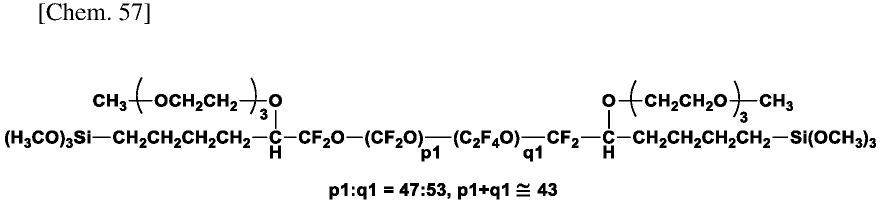

Another embodiment of the invention is a surface treating agent comprising a fluoropolyether-containing polymer having a hydroxy-containing silyl group or a hydrolyzable silyl group, represented by formula (1). The surface treating agent may also comprise a partial (hydrolytic) condensate which is obtained by condensing the hydroxy group on the fluoropolyether-containing polymer, or a hydroxy group resulting from partial hydrolysis of the hydrolyzable end group on the fluoropolyether-containing polymer in a well-known manner.

To the surface treating agent, a hydrolytic condensation catalyst may be added if necessary. Suitable hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

The hydrolytic condensation catalyst may be added in a catalytic amount, typically 0.01 to 5 parts, more preferably 0.1 to 1 part by weight per 100 parts by weight of the fluoropolyether-containing polymer and/or its partial (hydrolytic) condensate.

The surface treating agent may further comprise a solvent. Suitable solvents include fluorine-modified aliphatic hydrocarbon solvents such as perfluoroheptane and perfluorooctane; fluorine-modified aromatic hydrocarbon solvents such as 1,3-bis(trifluoromethyl)benzene; fluorine-modified ether solvents such as methyl perfluorobutyl ether, ethyl perfluorobutyl ether, and perfluoro(2-butyltetrahydrofuran); fluorine-modified alkylamine solvents such as perfluorotributylamine and perfluorotripentylamine; hydrocarbon solvents such as petroleum benzine, toluene, and xylene; ketone solvents such as acetone, methyl ethyl ketone, and methyl isobutyl ketone. Of these, fluorine-modified solvents are desirable for solubility and wettability, with 1,3-bis(trifluoromethyl)benzene, perfluoro(2-butyltetrahydrofuran), perfluorotributylamine, and ethyl perfluorobutyl ether being more desirable.

The solvents may be used in admixture of two or more while it is preferred that the fluoropolyether-containing polymer and its partial (hydrolytic) condensate be uniformly dissolved in the solvent. An optimum concentration of the fluoropolyether-containing polymer and its partial (hydrolytic) condensate in the solvent varies with a particular treating mode. The amount which is easy to weigh may be chosen. In the case of direct coating, the concentration may preferably be 0.01 to 10 parts by weight, more preferably 0.05 to 5 parts by weight per 100 parts by weight of the solvent and the fluoropolyether-containing polymer (and its partial (hydrolytic) condensate) combined. In the case of evaporation treatment, the concentration may preferably be 1 to 100 parts by weight, more preferably 3 to 30 parts by weight per 100 parts by weight of the solvent and the fluoropolyether-containing polymer (and its partial (hydrolytic) condensate) combined.

The surface treating agent may be applied to a substrate by any well-known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, especially 25 to 80°C for 30 minutes to 36 hours, especially 1 to 24 hours. When the agent is applied by evaporation, the curing temperature is desirably 20 to 200°C, particularly 25 to 80°C, for 30 minutes to 36 hours, particularly 1 to 24 hours. Humid curing conditions are also useful. The cured coating typically has a thickness of 0.1 to 100 nm, desirably 1 to 20 nm although the thickness depends on the type of substrate. Also, in the case of spray coating, for example, a procedure involving diluting the agent with a fluorochemical solvent having water previously added thereto, for thereby effecting hydrolysis to generate Si-OH, and thereafter, spraying the dilution is recommended because the coating rapidly cures.

The substrate to be treated with the surface treating agent is not particularly limited, and may be made of any desired materials including paper, fabric, metals, metal oxides, glass, plastics, ceramics, and quartz. The surface treating agent is effective for endowing the substrate with water/oil repellency and steel wool abrasion resistance. In particular, the surface treating agent is advantageously used for the treatment of SiO₂-deposited glass and film.

Preferred articles which may be treated with the surface treating agent include car navigation systems, mobile phones, smart phones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. The surface treating agent of the invention is effective for preventing fingerprints and sebum from adhering to the articles and also for imparting scratch resistance or abrasion resistance. Therefore, it is particularly useful as a water/oil repellent layer on touch panel displays and antireflective films.

The surface treating agent is also used for anti-staining coatings on sanitary ware such as bathtubs and washbowls; anti-staining coatings on glazing or strengthened glass and head lamp covers in transport vehicles such as automobiles, trains and aircraft; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; and resin modifiers. The agent is also effective for modifying the flow and dispersion of inorganic fillers, and for improving the lubricity of tape and film.

### EXAMPLES

Examples and Comparative Examples are given below for illustrating the invention, but the invention is not limited by Examples.

### [Example 1]

A reactor was charged with 272 ml of a 0.5 M THF solution of 3-butenylmagnesium bromide (1.4×10⁻¹ mol). With stirring, a mixture of 200 g (4.5×10⁻² mol) of a compound having the formula (A): 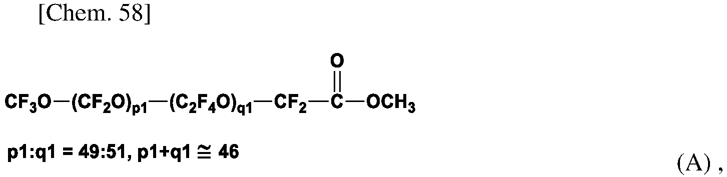 400 g of Asahiklin AC-6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 193 g of a fluoropolyether-containing polymer (number average molecular weight about 4,430) having the following formula (B).

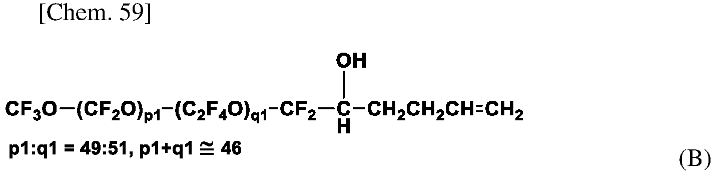

¹H-NMR
δ 1.4-1.7 (C-CH₂CH₂CH=CH₂) 2H
δ 1.9-2.2 (C-CH₂CH₂CH=CH₂, -CF₂-CH(OH)-CH₂-) 3H
δ 3.6-3.8 (-CF₂-CH (OH)-CH₂-) 1H
δ 4.8-4.9 (-CH₂CH=CH₂) 2H
δ 5.5-5.6 (-CH₂CH=CH₂) 1H

In a reactor, 100 g (2.3×10⁻² mol) of the compound having the formula (B): 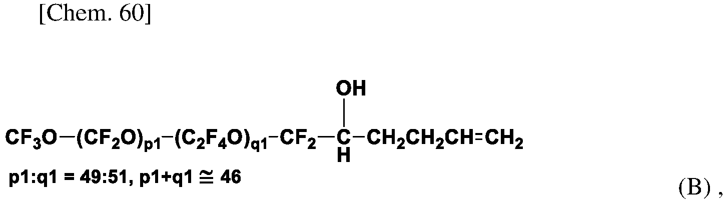 20.9 g (9.2×10⁻² mol) of diethylene glycol-2-bromoethyl methyl ether and 0.17 g (4.6×10⁻⁴ mol) of tetrabutylammonium iodide were mixed. Subsequently, 18 g (1.4×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 94 g of a fluoropolyether-containing polymer having the following formula (C).

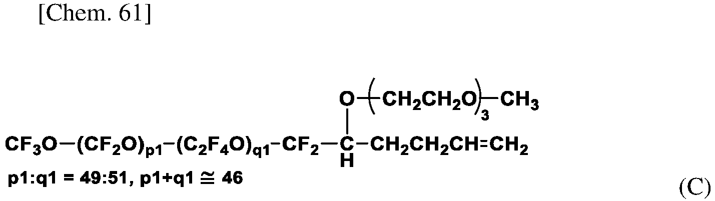

¹H-NMR
δ 1.5-1.7 (C-CH₂CH₂CH=CH₂) 2H
δ 2.0-2.2 (C-CH₂CH₂CH=CH₂) 2H
δ 3.0-3.2 (CF₂-CH-O-(CH₂CH₂O)₃-O-CH₃)) 3H
δ 3.3-3.6 (-O-(CH₂CH₂O)₃-O-CH₃) 12H
δ 3.7-3.8 (CF₂-CH-O-(CH₂CH₂O)₃-O-CH₃)) 1H
δ 4.7-5.0 (C-CH₂CH₂CH=CH₂) 2H
δ 5.5-5.7 (C-CH₂CH₂CH=CH₂) 1H

In a reactor, 80 g (1.7×10⁻² mol) of the compound having the formula (C): 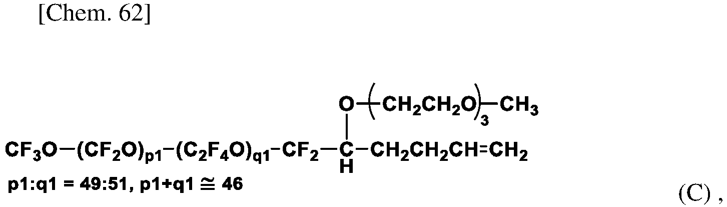 80 g of 1,3-bis(trifluoromethyl)benzene, 4.2 g (3.4×10⁻² mol) of trimethoxysilane, and 7.6×10⁻² g of a toluene solution of chloroplatinic acid/vinyl siloxane complex (containing 2.3×10⁻⁷ mol of Pt) were mixed. The solution was aged at 80°C for 24 hours. Thereafter, the solvent and unreacted reactants were distilled off in vacuum, obtaining 82 g of a liquid product.

On ¹H-NMR analysis, the compound was identified to have a structure of the following formula (D).

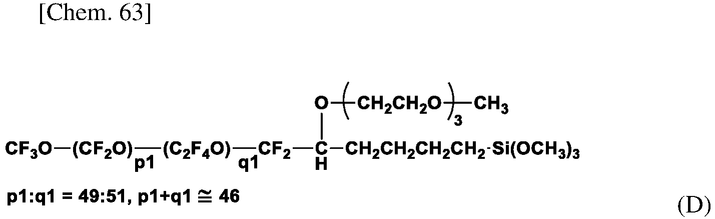

¹H-NMR
δ 0.4-0.6 (C-CH₂CH₂CH₂CH₂-Si) 2H
δ 1.2-1.6 (C-CH₂CH₂CH₂CH₂-Si) 6H
δ 3.0-3.2 (CF₂-CH-O-(CH₂CH₂O)₃-O-CH₃)) 3H
δ 3.3-3.6 (-O-(CH₂CH₂O)₃-O-CH₃, -Si(OCH₃)₃) 21H
δ 3.7-3.8 (CF₂-CH-O-(CH₂CH₂O)₃-O-CH₃)) 1H

### [Example 2]

A reactor was charged with 153 ml of a 0.5 M THF solution of 3-butenylmagnesium bromide (7.7×10⁻² mol). With stirring, a mixture of 100 g (2.6×10⁻² mol) of a compound having the formula (E): 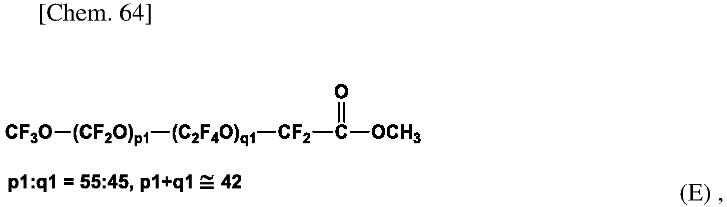 200 g of Asahiklin AC-6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 94 g of a fluoropolyether-containing polymer (number average molecular weight about 3,940) having the following formula (F).

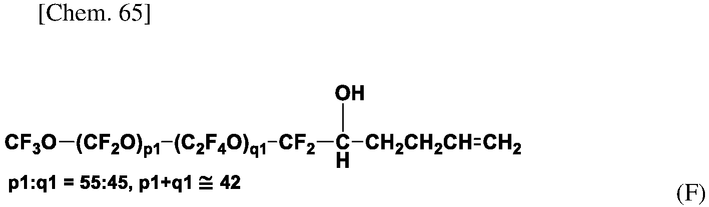

¹H-NMR
δ 1.4-1.7 (C-CH₂CH₂CH=CH₂) 2H
δ 1.9-2.2 (C-CH₂CH₂CH=CH₂, -CF₂-CH(OH)-CH₂-) 3H
δ 3.6-3.8 (-CF₂-CH (OH)-CH₂-) 1H
δ 4.8-4.9 (-CH₂CH=CH₂) 2H
δ 5.5-5.6 (-CH₂CH=CH₂) 1H

In a reactor, 50 g (1.3×10⁻² mol) of the compound having the formula (F): 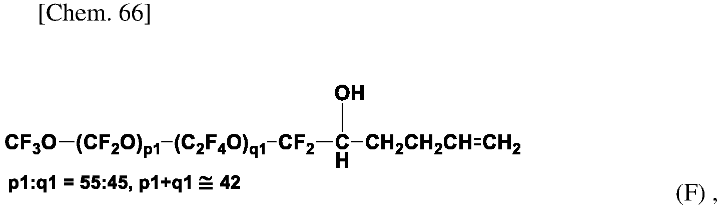 12 g (5.2×10⁻² mol) of diethylene glycol-2-bromoethyl methyl ether, and 0.10 g (2.6×10⁻⁴ mol) of tetrabutylammonium iodide were mixed. Subsequently, 10 g (7.5×10⁻² mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 44 g of a fluoropolyether-containing polymer having the following formula (G).

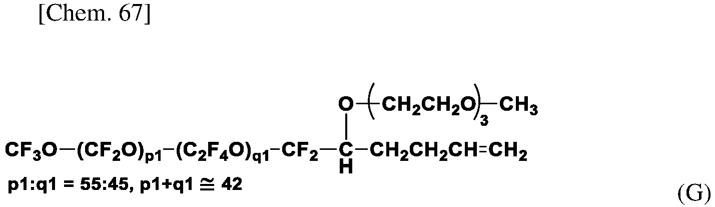

¹H-NMR
δ 1.5-1.7 (C-CH₂CH₂CH=CH₂) 2H
δ 2.0-2.2 (C-CH₂CH₂CH=CH₂) 2H
δ 3.0-3.2 (CF₂-CH-O-(CH₂CH₂O)₃-O-CH₃)) 3H
δ 3.3-3.6 (-O-(CH₂CH₂O)₃-O-CH₃) 12H
δ 3.7-3.8 (CF₂-CH-O-(CH₂CH₂O)₃-O-CH₃)) 1H
δ 4.7-5.0 (C-CH₂CH₂CH=CH₂) 2H
δ 5.5-5.7 (C-CH₂CH₂CH=CH₂) 1H

In a reactor, 40 g (9.8×10⁻³ mol) of the compound having the formula (G): 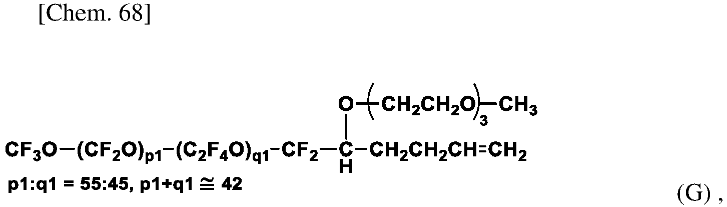 40 g of 1,3-bis(trifluoromethyl)benzene, 2.4 g (2.0×10⁻² mol) of trimethoxysilane, and 4.4×10⁻² g of a toluene solution of chloroplatinic acid/vinyl siloxane complex (containing 1.3×10⁻⁷ mol of Pt) were mixed. The solution was aged at 80°C for 24 hours. Thereafter, the solvent and unreacted reactants were distilled off in vacuum, obtaining 40 g of a liquid product.

On ¹H-NMR analysis, the compound was identified to have a structure of the following formula (H).

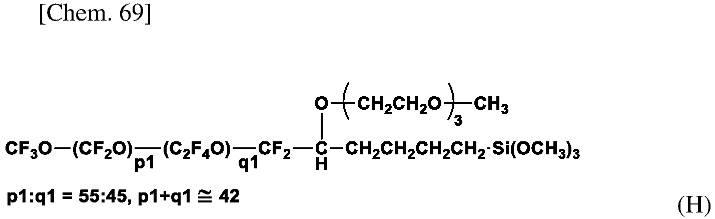

¹H-NMR
δ 0.4-0.6 (C-CH₂CH₂CH₂CH₂-Si) 2H
δ 1.2-1.6 (C-CH₂CH₂CH₂CH₂-Si) 6H
δ 3.0-3.2 (CF₂-CH-O-(CH₂CH₂O)₃-O-CH₃)) 3H
δ 3.3-3.6 (-O-(CH₂CH₂O)₃-O-CH₃, -Si(OCH₃)₃) 21H
δ 3.7-3.8 (CF₂-CH-O-(CH₂CH₂O)₃-O-CH₃)) 1H

### [Example 3]

In a reactor, 100 g (2.3×10⁻² mol) of the compound having the formula (B) obtained as above: 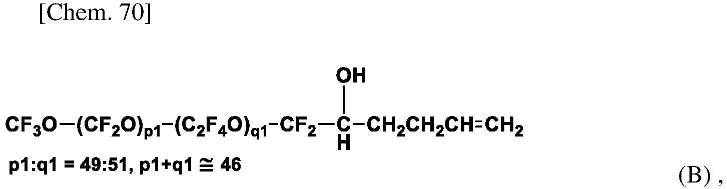 24.9 g (9.2×10⁻² mol) of triethylene glycol-2-bromoethyl methyl ether and 0.17 g (4.6×10⁻⁴ mol) of tetrabutylammonium iodide were mixed. Subsequently, 18 g (1.4×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 90 g of a fluoropolyether-containing polymer having the following formula (J).

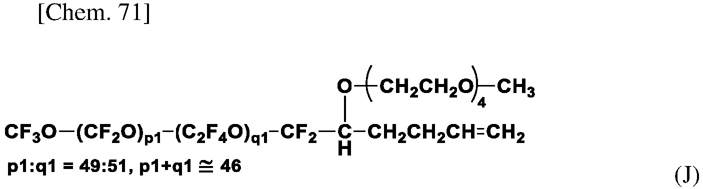

¹H-NMR
δ 1.5-1.7 (C-CH₂CH₂CH=CH₂) 2H
δ 2.0-2.2 (C-CH₂CH₂CH=CH₂) 2H
δ 3.0-3.2 (CF₂-CH-O-(CH₂CH₂O)₄-O-CH₃)) 3H
δ 3.3-3.6 (-O-(CH₂CH₂O)₄-O-CH₃) 16H
δ 3.7-3.8 (CF₂-CH-O-(CH₂CH₂O)₄-O-CH₃)) 1H
δ 4.7-5.0 (C-CH₂CH₂CH=CH₂) 2H
δ 5.5-5.7 (C-CH₂CH₂CH=CH₂) 1H

In a reactor, 80 g (1.7×10⁻² mol) of the compound having the formula (J): 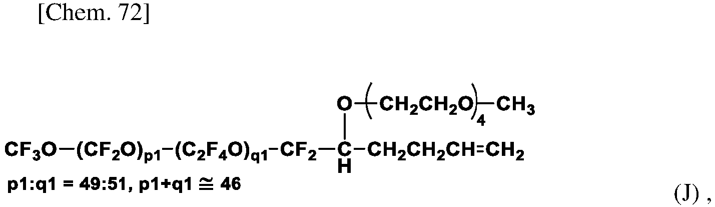 80 g of 1,3-bis(trifluoromethyl)benzene, 4.2 g (3.4×10⁻² mol) of trimethoxysilane, and 7.6×10⁻² g of a toluene solution of chloroplatinic acid/vinyl siloxane complex (containing 2.3×10⁻⁷ mol of Pt) were mixed. The solution was aged at 80°C for 24 hours. Thereafter, the solvent and unreacted reactants were distilled off in vacuum, obtaining 80 g of a liquid product.

On ¹H-NMR analysis, the compound was identified to have a structure of the following formula (K).

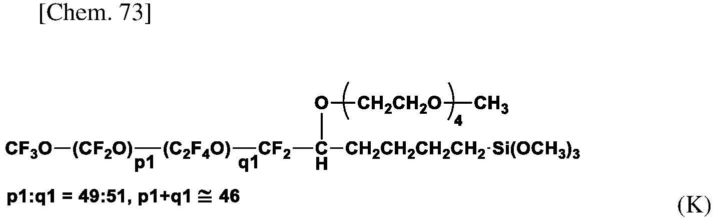

¹H-NMR
δ 0.4-0.6 (C-CH₂CH₂CH₂CH₂-Si) 2H
δ 1.2-1.6 (C-CH₂CH₂CH₂CH₂-Si) 6H
δ 3.0-3.2 (CF₂-CH-O-(CH₂CH₂O)₄-O-CH₃)) 3H
δ 3.3-3.6 (-O-(CH₂CH₂O)₄-O-CH₃, -Si(OCH₃)₃) 25H
δ 3.7-3.8 (CF₂-CH-O-(CH₂CH₂O)₄-O-CH₃)) 1H

### [Example 4]

A reactor was charged with 272 ml of a 0.5 M THF solution of 5-hexenylmagnesium bromide (1.36×10⁻¹ mol). With stirring, a mixture of 200 g (4.5×10⁻² mol) of a compound having the formula (A): 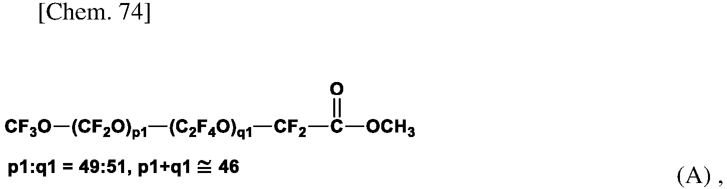 400 g of Asahiklin AC-6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 189 g of a fluoropolyether-containing polymer (number average molecular weight about 4,450) having the following formula (L).

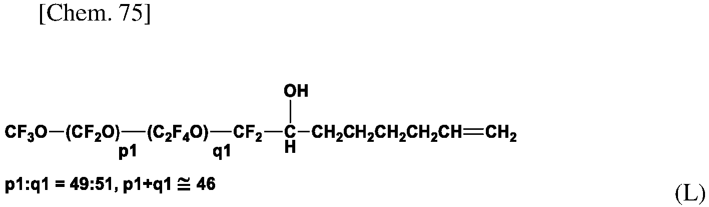

¹H-NMR
δ 1.3-1.8 (C-CH₂CH₂CH₂CH₂CH=CH₂) 6H
δ 1.9-2.1 (C-CH₂CH₂CH₂CH₂CH=CH₂) 2H
δ 3.3-3.5 (-CF₂-CH(OH)-CH₂-) 1H
δ 3.6-3.8 (-CF₂-CH (OH)-CH₂-) 1H
δ 4.7-4.9 (-CH₂CH=CH₂) 2H
δ 5.5-5.7 (-CH₂CH=CH₂) 1H

In a reactor, 40 g (9.0×10⁻³ mol) of the compound having the formula (L): 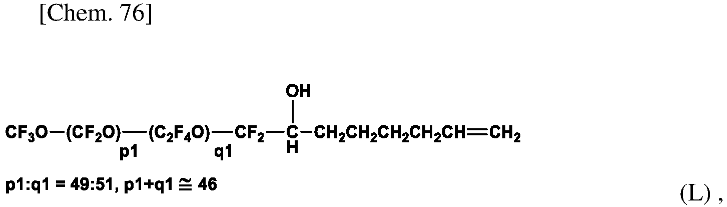 8.2 g (3.6×10⁻² mol) of diethylene glycol-2-bromoethyl methyl ether and 0.06 g (1.6×10⁻⁴ mol) of tetrabutylammonium iodide were mixed. Subsequently, 7.2 g (5.4×10⁻² mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 21 g of a fluoropolyether-containing polymer having the following formula (M).

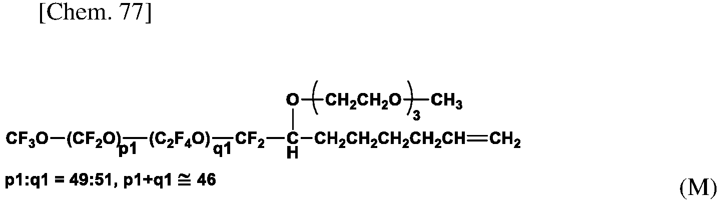

¹H-NMR
δ 1.3-1.8 (C-CH₂CH₂CH₂CH₂CH=CH₂) 6H
δ 1.9-2.1 (C-CH₂CH₂CH₂CH₂CH=CH₂) 2H
δ 3.0-3.2 (CF₂-CH-O-(CH₂CH₂O)₃-O-CH₃)) 3H
δ 3.3-3.6 (-O-(CH₂CH₂O)₃-O-CH₃) 12H
δ 3.7-3.8 (CF₂-CH-O-(CH₂CH₂O)₃-O-CH₃)) 1H
δ 4.8-5.1 (C-CH₂CH₂CH=CH₂) 2H
δ 5.6-5.8 (C-CH₂CH₂CH=CH₂) 1H

In a reactor, 20 g (4.3×10⁻³ mol) of the compound having the formula (M): 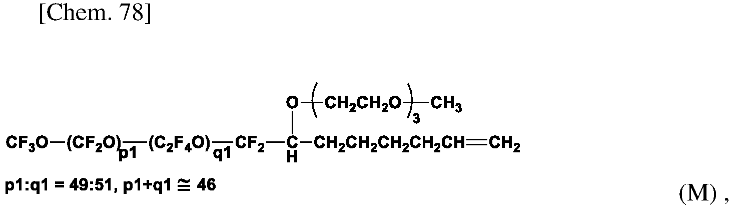 20 g of 1,3-bis(trifluoromethyl)benzene, 1.05 g (8.6×10⁻³ mol) of trimethoxysilane, and 2.0×10⁻² g of a toluene solution of chloroplatinic acid/vinyl siloxane complex (containing 5.9×10⁻⁸ mol of Pt) were mixed. The solution was aged at 80°C for 24 hours. Thereafter, the solvent and unreacted reactants were distilled off in vacuum, obtaining 21 g of a liquid product.

On ¹H-NMR analysis, the compound was identified to have a structure of the following formula (N).

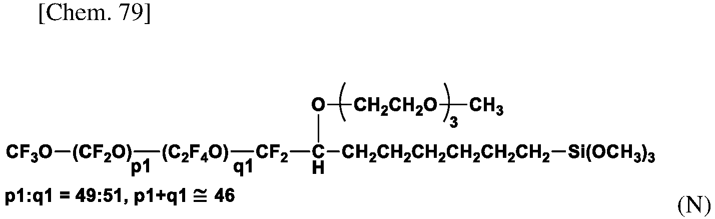

¹H-NMR
δ 0.4-0.6 (C-CH₂CH₂CH₂CH₂-Si) 2H
δ 1.1-1.8 (C-CH₂CH₂CH₂CH₂CH₂CH₂-Si) 10H
δ 3.0-3.2 (CF₂-CH-O-(CH₂CH₂O)₃-O-CH₃)) 3H
δ 3.3-3.6 (-O-(CH₂CH₂O)₃-O-CH₃, -Si(OCH₃)₃) 21H
δ 3.7-3.8 (CF₂-CH-O-(CH₂CH₂O)₃-O-CH₃)) 1H

### [Example 5]

A reactor was charged with 126 ml of a 0.5 M THF solution of 3-butenylmagnesium bromide (6.3×10⁻² mol). With stirring, a mixture of 100 g (2.1×10⁻² mol) of a compound having the formula (O): 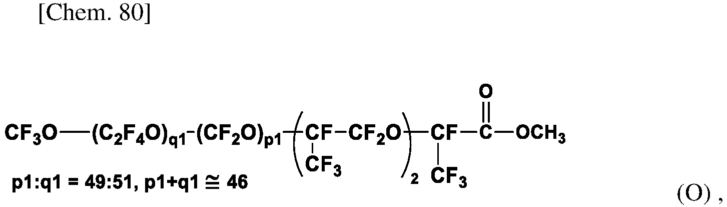 200 g of Asahiklin AC-6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 96 g of a fluoropolyether-containing polymer (number average molecular weight about 4,800) having the following formula (P).

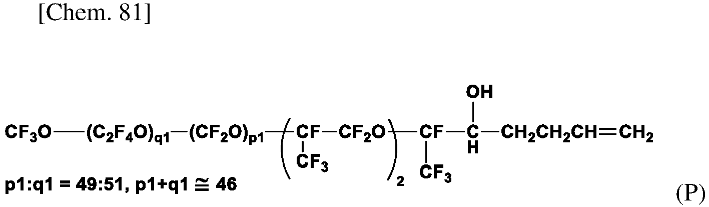

¹H-NMR
δ 1.4-1.7 (C-CH₂CH₂CH=CH₂) 2H
δ 1.9-2.2 (C-CH₂CH₂CH=CH₂, -CF(CF₃)-CH(OH)-CH₂-) 3H
δ 3.5-3.7 (-CF(CF₃)-CH (OH)-CH₂-) 1H
δ 4.8-4.9 (-CH₂CH=CH₂) 2H
δ 5.5-5.6 (-CH₂CH=CH₂) 1H

In a reactor, 40 g (8.2×10⁻³ mol) of the compound having the formula (P): 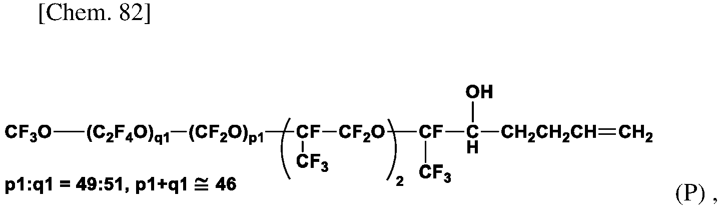 7.5 g (3.3×10⁻² mol) of diethylene glycol-2-bromoethyl methyl ether and 0.06 g (1.6×10⁻⁴ mol) of tetrabutylammonium iodide were mixed. Subsequently, 6.6 g (4.9×10⁻² mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 38 g of a fluoropolyether-containing polymer having the following formula (Q).

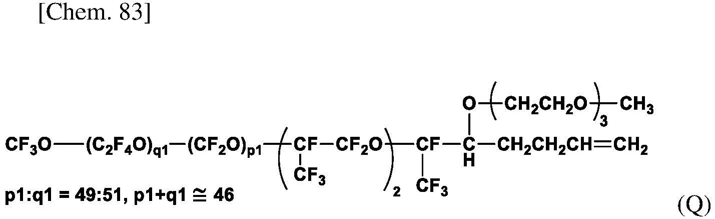

¹H-NMR
δ 1.5-1.7 (C-CH₂CH₂CH=CH₂) 2H
δ 2.1-2.3 (C-CH₂CH₂CH=CH₂) 2H
δ 3.0-3.2 (CF₂-CH-O-(CH₂CH₂O)₃-O-CH₃)) 3H
δ 3.3-3.6 (-O-(CH₂CH₂O)₃-O-CH₃) 12H
δ 3.6-3.8 (CF(CF₃)-CH-O-(CH₂CH₂O)₃-O-CH₃)) 1H
δ 5.0-5.2 (C-CH₂CH₂CH=CH₂) 2H
δ 5.7-5.8 (C-CH₂CH₂CH=CH₂) 1H

In a reactor, 20 g (4.1×10⁻³ mol) of the compound having the formula (Q): 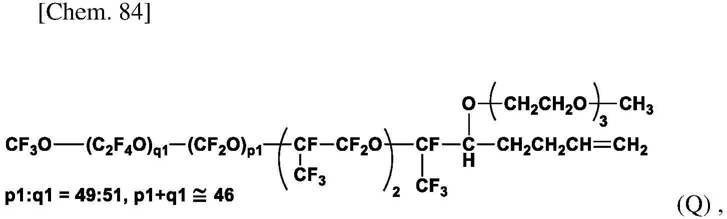 20 g of 1,3-bis(trifluoromethyl)benzene, 1.0 g (8.2×10⁻³ mol) of trimethoxysilane, and 1.9×10⁻² g of a toluene solution of chloroplatinic acid/vinyl siloxane complex (containing 5.9×10⁻⁸ mol of Pt) were mixed. The solution was aged at 80°C for 24 hours. Thereafter, the solvent and unreacted reactants were distilled off in vacuum, obtaining 19 g of a liquid product.

On ¹H-NMR analysis, the compound was identified to have a structure of the following formula (R).

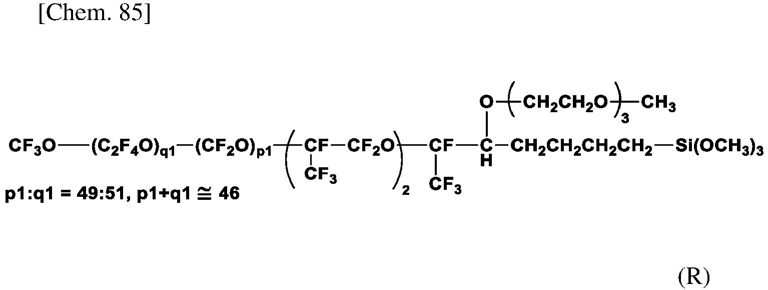

¹H-NMR
δ 0.4-0.6 (C-CH₂CH₂CH₂CH₂-Si) 2H
δ 1.2-1.7 (C-CH₂CH₂CH₂CH₂-Si) 4H
δ 3.0-3.2 (CF₂-CH-O-(CH₂CH₂0)₃-O-CH₃)) 3H
δ 3.3-3.6 (-O-(CH₂CH₂O)₃-O-CH₃, -Si(OCH₃)₃) 21H
δ 3.7-3.8 (CF₂-CH-O-(CH₂CH₂0)₃-O-CH₃)) 1H

### [Example 6]

In a reactor, 40 g (8.7×10⁻³ mol) of the compound having the formula (C): 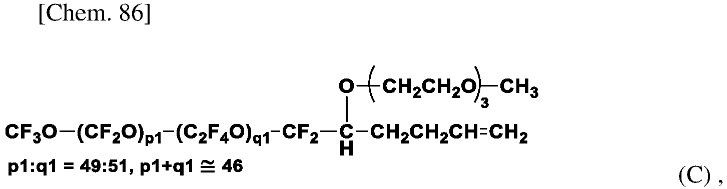 11.7 g (8.7×10⁻² mol) of a siloxane having the formula (S): 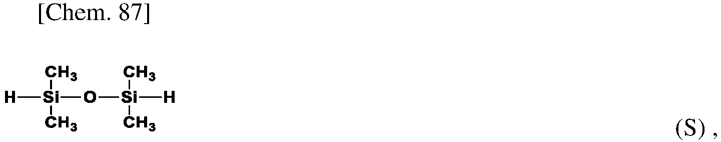 and 40 g of 1,3-bis(trifluoromethyl)benzene were mixed and heated at 80°C. Then 3.9×10⁻² g of a toluene solution of chloroplatinic acid/vinyl siloxane complex (containing 1.2×10⁻⁷ mol of Pt) was added to the mixture, which was aged at 80°C for 24 hours. Thereafter, the residual solvent was distilled off in vacuum, obtaining 41 g of a fluoropolyether-containing polymer having the following formula (T).

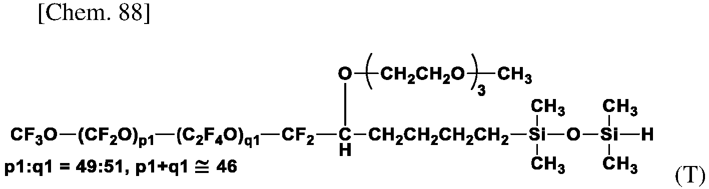

¹H-NMR
δ 0-0.3 (-Si-(CH₃)₂-) 12H
δ 0.4-0.6 (C-CH₂CH₂CH₂CH₂-Si) 2H
δ 1.2-1.7 (C-CH₂CH₂CH₂CH₂-Si) 6H
δ 3.0-3.2 (CF₂-CH-O-(CH₂CH₂0)₃-O-CH₃)) 3H
δ 3.3-3.6 (-O-(CH₂CH₂O)₃-O-CH₃) 12H
δ 3.7-3.8 (CF₂-CH-O-(CH₂CH₂0)₃-O-CH₃)) 1H
δ 3.9-4.1 (-Si(CH₃) H) 1H

In a reactor, 20 g (4.2×10⁻³ mol) of the compound having the formula (T): 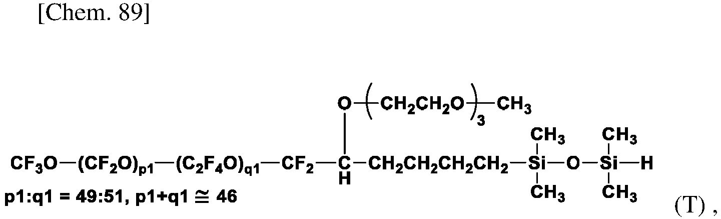 20 g of 1,3-bis(trifluoromethyl)benzene, 1.36 g (8.4×10⁻³ mol) of allyltrimethoxysilane, and 2.0×10⁻² g of a toluene solution of chloroplatinic acid/vinyl siloxane complex (containing 6.0×10⁻⁸ mol of Pt) were mixed. The solution was aged at 80°C for 24 hours. Thereafter, the solvent and unreacted reactants were distilled off in vacuum, obtaining 20 g of a liquid product.

On ¹H-NMR analysis, the compound was identified to have a structure of the following formula (U).

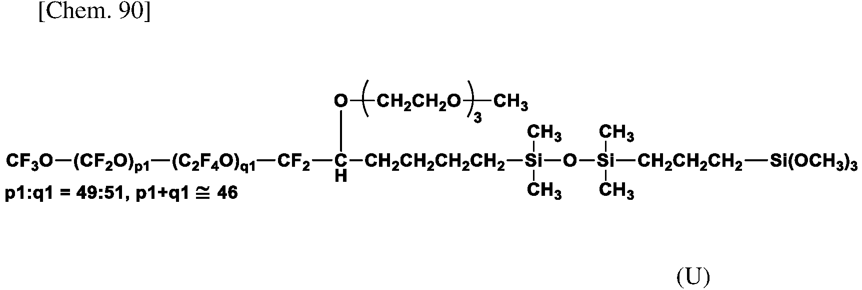

¹H-NMR
δ 0-0.3 (-Si-(CH₃)₂-) 12H
δ 0.4-0.7 (C-CH₂CH₂CH₂CH₂-Si, Si-CH₂CH₂CH₂-Si) 6H
δ 1.2-1.8 (C-CH₂CH₂CH₂CH₂-Si, Si-CH₂CH₂CH₂-Si) 8H
δ 3.0-3.2 (CF₂-CH-O-(CH₂CH₂O)₃-O-CH₃)) 3H
δ 3.3-3.6 (-O-(CH₂CH₂O)₃-O-CH₃, -Si(OCH₃)₃) 21H
δ 3.7-3.8 (CF₂-CH-O-(CH₂CH₂O)₃-O-CH₃)) 1H

### [Example 7]

A reactor was charged with 288 ml of a 0.5 M THF solution of 3-butenylmagnesium bromide (1.4×10⁻¹ mol). With stirring, a mixture of 200 g (4.8×10⁻² mol) of a compound having the formula (W): 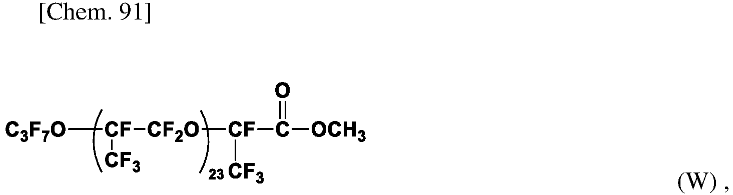 400 g of Asahiklin AC-6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 188 g of a fluoropolyether-containing polymer (number average molecular weight about 4,290) having the following formula (X).

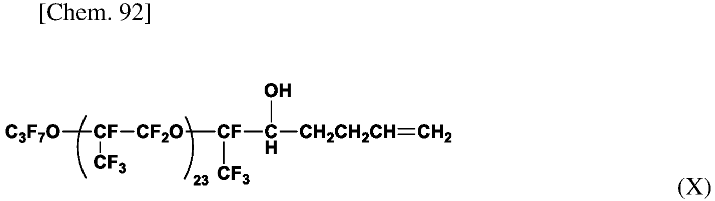

¹H-NMR
δ 1.4-1.7 (C-CH₂CH₂CH=CH₂) 2H
δ 1.9-2.2 (C-CH₂CH₂CH=CH₂) 2H
δ 2.4-2.6 (-CF₂-CH(OH)-CH₂-) 1H
δ 3.9-4.0 (-CF₂-CH (OH)-CH₂-) 1H
δ 4.7-4.9 (-CH₂CH=CH₂) 2H
δ 5.5-5.7 (-CH₂CH=CH₂) 1H

In a reactor, 100 g (2.3×10⁻² mol) of the compound having the formula (X): 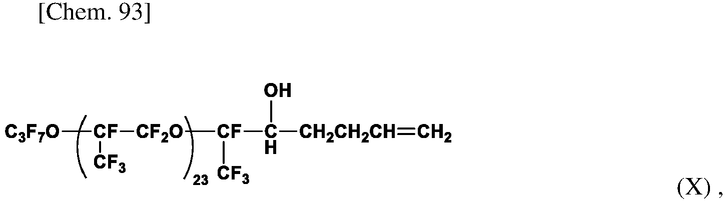 21 g (9.2×10⁻² mol) of diethylene glycol-2-bromoethyl methyl ether, and 0.17 g (4.6×10⁻⁴ mol) of tetrabutylammonium iodide were mixed. Subsequently, 18 g (1.4×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 89 g of a fluoropolyether-containing polymer having the following formula (Y).

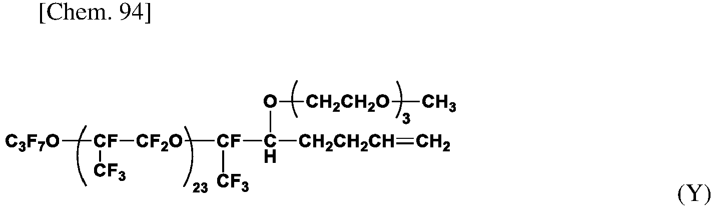

¹H-NMR
δ 1.5-1.7 (C-CH₂CH₂CH=CH₂) 2H
δ 2.0-2.2 (C-CH₂CH₂CH=CH₂) 2H
δ 3.0-3.2 (CF₂-CH-O-(CH₂CH₂O)₃-O-CH₃)) 3H
δ 3.3-3.6 (-O-(CH₂CH₂O)₃-O-CH₃) 12H
δ 3.9-4.0 (CF₂-CH-O-(CH₂CH₂O)₃-O-CH₃)) 1H
δ 4.8-5.1 (C-CH₂CH₂CH=CH₂) 2H
δ 5.6-5.8 (C-CH₂CH₂CH=CH₂) 1H

In a reactor, 80 g (1.7×10⁻² mol) of the compound having the formula (Y): 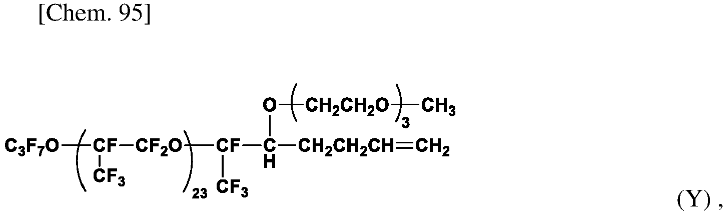 80 g of 1,3-bis(trifluoromethyl)benzene, 4.2 g (3.4×10⁻² mol) of trimethoxysilane, and 7.6×10⁻² g of a toluene solution of chloroplatinic acid/vinyl siloxane complex (containing 2.3×10⁻⁷ mol of Pt) were mixed. The solution was aged at 80°C for 24 hours. Thereafter, the solvent and unreacted reactants were distilled off in vacuum, obtaining 78 g of a liquid product.

On ¹H-NMR analysis, the compound was identified to have a structure of the following formula (Z).

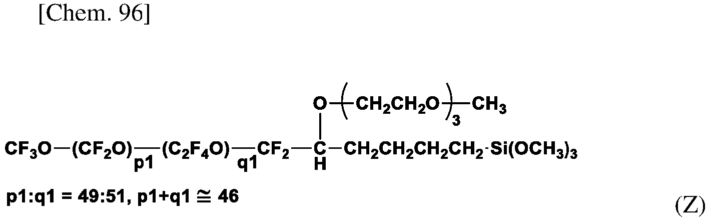

¹H-NMR
δ 0.4-0.6 (C-CH₂CH₂CH₂CH₂-Si) 2H
δ 1.2-1.6 (C-CH₂CH₂CH₂CH₂-Si) 6H
δ 3.0-3.2 (CF₂-CH-O-(CH₂CH₂O)₃-O-CH₃)) 3H
δ 3.3-3.6 (-O-(CH₂CH₂O)₃-O-CH₃, -Si(OCH₃)₃) 21H
δ 3.9-4.0 (CF₂-CH-O-(CH₂CH₂O)₃-O-CH₃)) 1H

### [Example 8]

A reactor was charged with 282 ml of a 0.5 M THF solution of 3-butenylmagnesium bromide (1.4×10⁻¹ mol). With stirring, a mixture of 100 g (2.4×10⁻² mol) of a compound having the formula (A'): 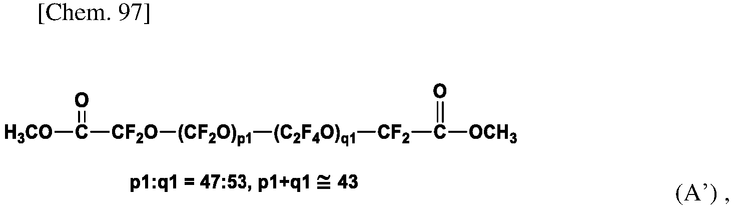 200 g of Asahiklin AC-6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 94 g of a fluoropolyether-containing polymer (number average molecular weight about 4,400) having the following formula (B').

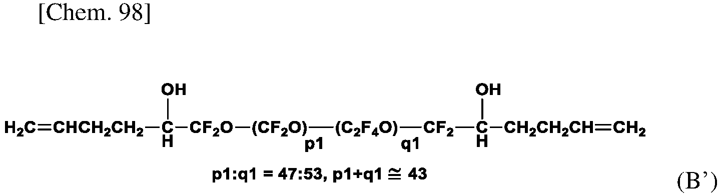

¹H-NMR
δ 1.4-1.7 (C-CH₂CH₂CH=CH₂) 4H
δ 1.9-2.2 (C-CH₂CH₂CH=CH₂, -CF₂-CH(OH)-CH₂-) 6H
δ 3.6-3.8 (-CF₂-CH (OH)-CH₂-) 2H
δ 4.8-4.9 (-CH₂CH=CH₂) 4H
δ 5.5-5.6 (-CH₂CH=CH₂) 2H

In a reactor, 40 g (9.4×10⁻³ mol) of the compound having the formula (B'): 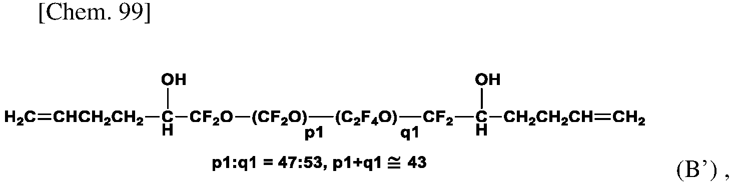 17.0 g (7.5×10⁻² mol) of diethylene glycol-2-bromoethyl methyl ether and 0.14 g (3.8×10⁻⁴ mol) of tetrabutylammonium iodide were mixed. Subsequently, 14 g (1.1×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 39 g of a fluoropolyether-containing polymer having the following formula (C').

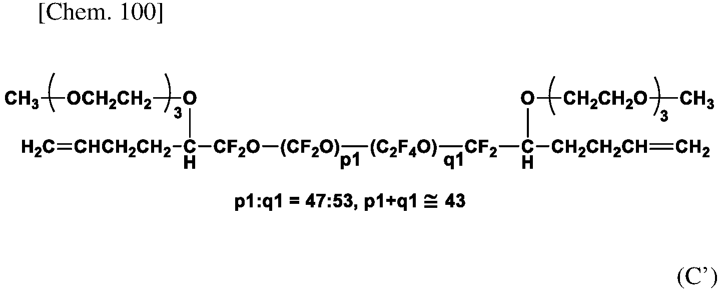

¹H-NMR
δ 1.5-1.7 (C-CH₂CH₂CH=CH₂) 4H
δ 1.9-2.1 (C-CH₂CH₂CH=CH₂) 4H
δ 3.0-3.2 (CF₂-CH-O-(CH₂CH₂O)₃-O-CH₃)) 6H
δ 3.3-3.6 (-O-(CH₂CH₂O)₃-O-CH₃) 24H
δ 3.7-3.8 (CF₂-CH-O-(CH₂CH₂O)₃-O-CH₃)) 2H
δ 5.0-5.2 (C-CH₂CH₂CH=CH₂) 4H
δ 5.7-5.8 (C-CH₂CH₂CH=CH₂) 2H

In a reactor, 20 g (4.4×10⁻³ mol) of the compound having the formula (C'): 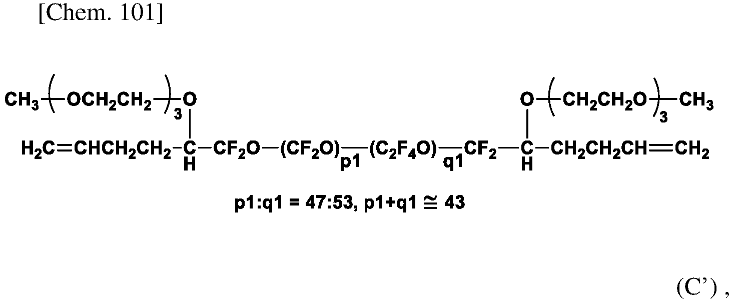 20 g of 1,3-bis(trifluoromethyl)benzene, 2.2 g (1.8×10⁻² mol) of trimethoxysilane, and 4.7×10⁻² g of a toluene solution of chloroplatinic acid/vinyl siloxane complex (containing 1.4×10⁻⁷ mol of Pt) were mixed. The solution was aged at 80°C for 24 hours. Thereafter, the solvent and unreacted reactants were distilled off in vacuum, obtaining 21 g of a liquid product.

On ¹H-NMR analysis, the compound was identified to have a structure of the following formula (D').

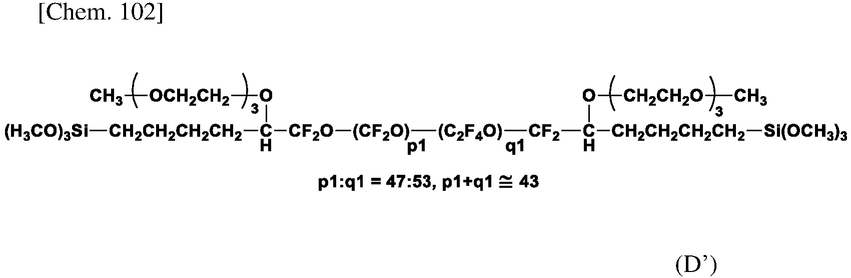

**¹H-NMR**
δ 0.4-0.6 (-O-CH₂CH₂CH₂-Si, C-CH₂CH₂CH₂CH₂-Si) 8H
δ 1.2-1.7 (-O-CH₂CH₂CH₂-Si, C-CH₂CH₂CH₂CH₂-Si)
δ 3.0-3.2 (CF₂-CH-O-(CH₂CH₂O)₃-O-CH₃)) 6H
δ 3.3-3.6 (-O-(CH₂CH₂O)₃-O-CH₃, -Si(OCH₃)₃) 42H
δ 3.7-3.8 (CF₂-CH-O-(CH₂CH₂O)₃-O-CH₃)) 2H

For comparison, the following polymers were used.

### [Comparative Example 1]

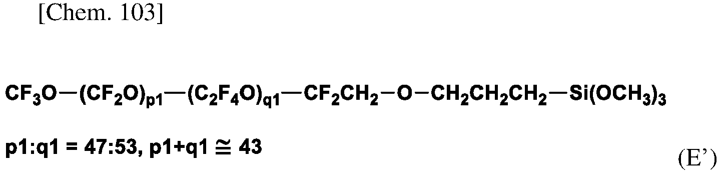

### [Comparative Example 2]

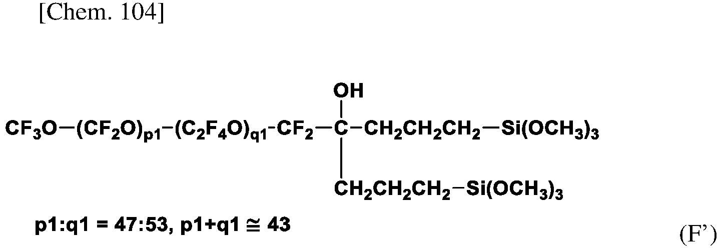

### [Comparative Example 3]

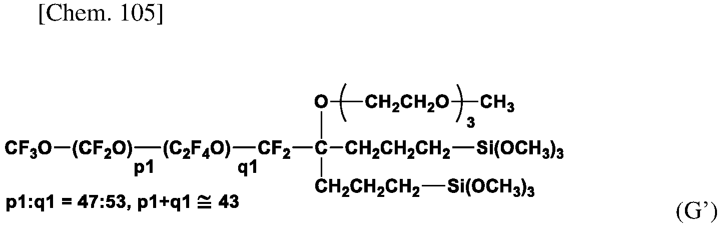

### Preparation of surface treating agent and formation of cured film

Surface treating agents were prepared by dissolving the fluoropolyether-containing polymers of the structure having formulae (D) and (K) obtained in Examples 1 and 3 or the polymers having formulae (E'), (F') and (G') in Comparative Examples 1, 2 and 3 in Novec 7200 (ethyl perfluorobutyl ether by 3M) in a concentration of 20 wt%. Onto glass having an outermost surface treated with SiO₂ of 10 nm (Gorilla by Corning), 4 µl of each surface treating agent was deposited by vacuum evaporation under conditions including pressure 3.0×10⁻³ Pa and heating temperature 500°C. The deposit was cured in an atmosphere of 25°C and humidity 50% for 12 hours, obtaining a cured film of 8 nm thick.

### Evaluation of water/oil repellency

### [Evaluation of initial water/oil repellency]

Using a contact angle meter Drop Master (Kyowa Interface Science Co., Ltd.), the cured film on glass was measured for a contact angle with water as an index of water repellency (droplet 2 µl, temperature 25°C, humidity 40%). The results (initial contact angle with water) are shown in Table 1.

At the initial, all the films of Examples and Comparative Examples showed excellent water repellency.

### [Evaluation 1 of abrasion resistance]

Using a friction tester (Shinto Scientific Co., Ltd.), the cured film on glass was rubbed 10,000 cycles under the conditions shown below. Thereafter, the cured film was similarly measured for a contact angle with water (water repellency) as evaluation 1 of abrasion resistance. The test environmental conditions included temperature 25°C and humidity 40%. The results (contact angle with water after abrasion) are shown in Table 1.

### Eraser abrasion resistance

| Eraser: | by Minoan |
|---|---|
| Contact area: | 6 mmφ |
| Moving distance (one way): | 40 mm |
| Moving speed: | 3,200 mm/min |
| Load: | 1 kg/6 mmφ |

**[Table 1]**

| | Initial contact angle with water (°) | Contact angle with water after abrasion (°) |
|---|---|---|
| Example 1 | 117 | 107 |
| Example 3 | 115 | 110 |
| Comparative Example 1 | 115 | 45 |
| Comparative Example 2 | 114 | 68 |
| Comparative Example 3 | 114 | 97 |

### [Evaluation 2 of abrasion resistance]

Using a friction tester (Shinto Scientific Co., Ltd.), the cured film on glass was rubbed 15,000 cycles under the conditions shown below. Thereafter, the cured film was similarly measured for a contact angle with water (water repellency) as evaluation 2 of abrasion resistance. For the evaluation, a contact angle with water of 100° or more among 8 times of abrasion tests was regarded as pass, and the pass rate was calculated. The test environmental conditions included temperature 25°C and humidity 40%. The results (pass rate of contact angle with water after abrasion of 100° or more) are shown in Table 2.

### Eraser abrasion resistance

| | |
|---|---|
| Eraser: | by Minoan |
| Contact area: | 6 mmφ |
| Moving distance (one way): | 40 mm |
| Moving speed: | 3,200 mm/min |
| Load: | 1 kg/6 mmφ |

**[Table 2]**

| | Contact angle with water after abrasion Pass rate of 100° or more (%) |
|---|---|
| Example 1 | 75 |
| Example 3 | 89 |
| Comparative Example 1 | 0 |
| Comparative Example 2 | 0 |
| Comparative Example 3 | 0 |

Since the polymers of Examples 1 and 3 and Comparative Example 3 had a polyether group in the molecule, the contact angle with water after 10,000 cycles of eraser abrasion was better than that of the polymers of Comparative Examples 1 and 2 having no polyether group in the molecule. Furthermore, since the polymers of Examples 1 and 3 had fewer substrate adhesive groups than the polymer of Comparative Example 3, the polymer had excellent molecular mobility on the substrate, and therefore the contact angle with water was kept at 100° or more. In addition, the pass rate in the abrasion durability test of 15,000 cycles was also excellent.

## Claims

1. A fluoropolyether-containing polymer having the following general formula (1): 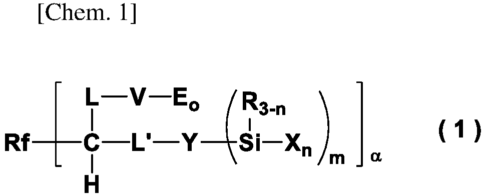 wherein Rf is a mono- or divalent fluorooxyalkylene-containing polymer residue, L is independently a divalent heteroatom, L' is independently a single bond or divalent heteroatom, Y is independently a di- to hexavalent hydrocarbon group which may contain at least one selected from an oxygen atom, a silicon atom and a siloxane bond, R is independently C₁-C₄ alkyl or phenyl, X is independently a hydroxy or hydrolyzable group, or a group having the following general formula (2): 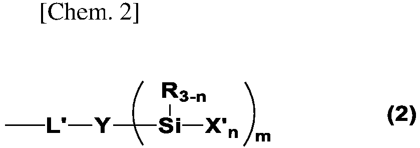 wherein n is independently an integer of 1 to 3 for each silicon atom, m is independently an integer of 1 to 5, X' is a hydroxyl or hydrolyzable group, V is independently a single bond or a di- to hexavalent group selected from a silalkylene group, a silarylene group, di- to hexavalent linear organopolysiloxane residues of 2 to 10 silicon atoms or di- to hexavalent branched or cyclic organopolysiloxane residues of 3 to 10 silicon atoms, E is independently a monovalent polyether group, o is independently an integer of 1 to 5, and α is 1 or 2.

2. The fluoropolyether-containing polymer according to claim 1 wherein α in formula (1) is 1, and Rf is a group having the following general formula (3): 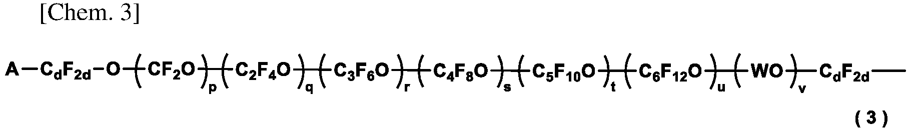 wherein A is fluorine, hydrogen, or fluoroalkyl group terminated with a -CF₃ group, W is independently a fluoroalkylene group containing at least one hydrogen atom, d is each independently an integer of 1 to 3, p, q, r, s, t, u and v each are an integer of 0 to 200, p+q+r+s+t+u+v is 3 to 200, each of the units associated with p, q, r, s, t, u and v may be linear or branched, and individual repeating units within the parentheses with p, q, r, s, t, u and v may be randomly bonded.

3. The fluoropolyether-containing polymer of claim 1 wherein α in formula (1) is 2, and Rf is a group having the following general formula (4): 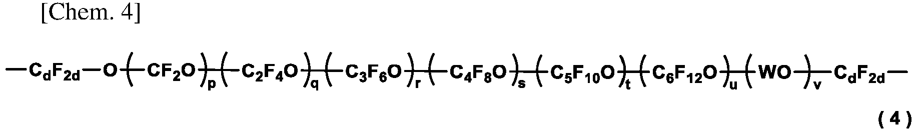 wherein W is independently a fluoroalkylene group containing at least one hydrogen atom, d is each independently an integer of 1 to 3, p, q, r, s, t, u and v each are an integer of 0 to 200, p+q+r+s+t+u+v is 3 to 200, each of the units associated with p, q, r, s, t, u and v may be linear or branched, and individual repeating units within the parentheses with p, q, r, s, t, u and v may be randomly bonded.

4. The fluoropolyether-containing polymer of any one of claims 1 to 3 wherein in formula (1), Y is a group selected from the group consisting of a C₃-C₁₀ alkylene group, an alkylene group containing C₆-C₈ arylene, a divalent group having alkylene moieties bonded via a silalkylene structure or silarylene structure, a di- to tetravalent group having a C₂-C₁₀ alkylene moiety bonded to the valence bond of a di- to tetravalent linear organopolysiloxane residue of 2 to 10 silicon atoms or a di- to tetravalent group having a C₂-C₁₀ alkylene moiety bonded to the valence bond of a di- to tetravalent branched or cyclic organopolysiloxane residue of 3 to 10 silicon atoms.

5. The fluoropolyether-containing polymer of any one of claims 1 to 4 wherein E in formula (1) is a group having the following general formula (5): 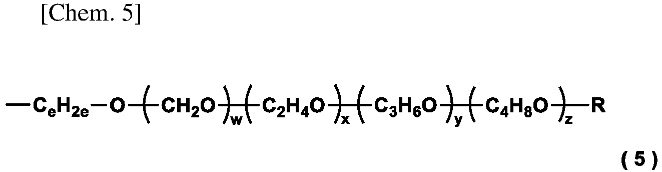 wherein R is C₁-C₄ alkyl or phenyl, e is an integer of 1 to 4, w, x, y and z each are an integer of 0 to 30, w+x+y+z is 1 to 50, each of the units associated with w, x, y and z may be linear or branched, and individual repeating units within the parentheses with w, x, y and z may be randomly bonded.

6. The fluoropolyether-containing polymer of any one of claims 1 to 5 wherein in formula (1), X is each independently selected from the group consisting of hydroxy, C₁-C₁₀ alkoxy group, C₂-C₁₀ alkoxyalkoxy group, C₁-C₁₀ acyloxy group, C₂-C₁₀ alkenyloxy group, and halogen.

7. The fluoropolyether-containing polymer of any one of claims 1 to 6 wherein the polymer represented by formula (1) is selected from those polymers having the following formulae: 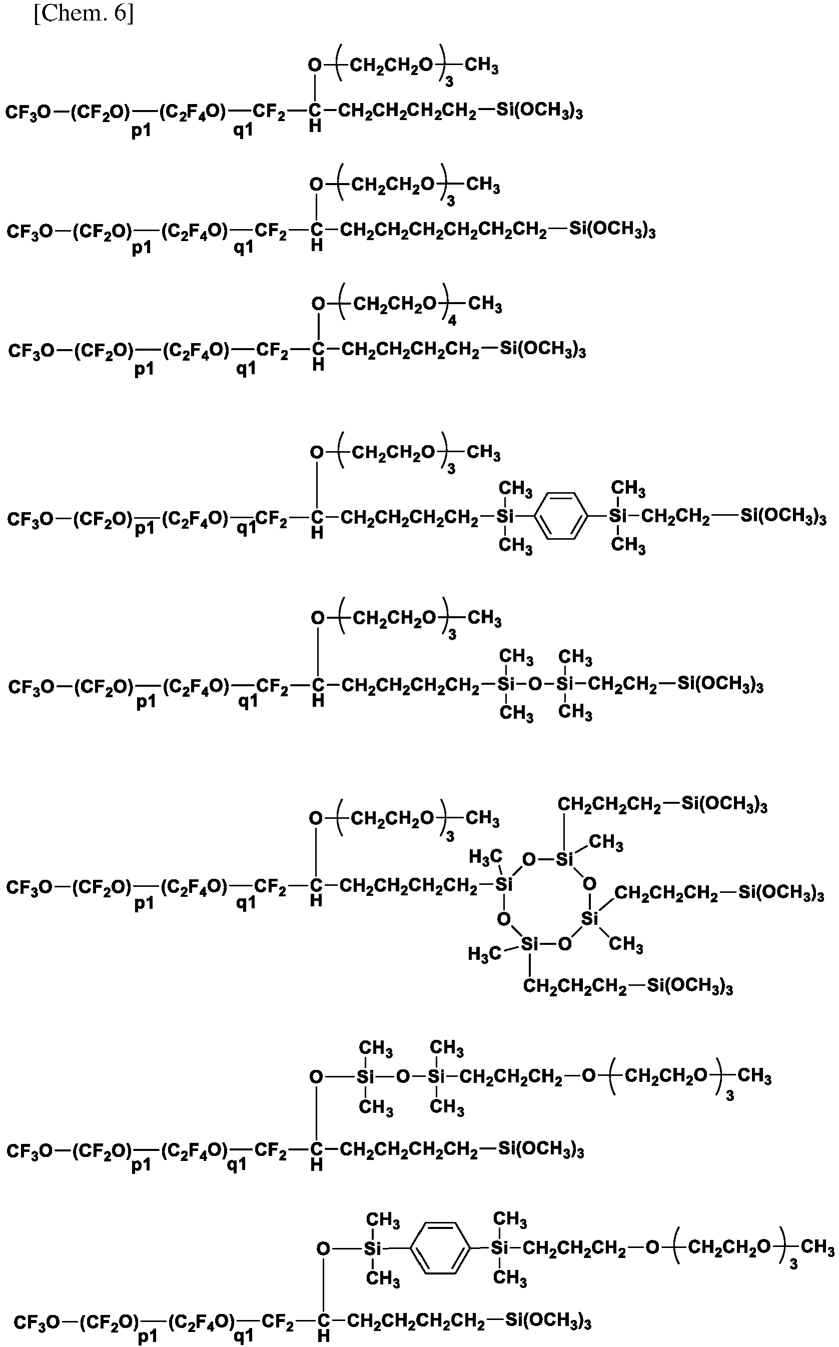 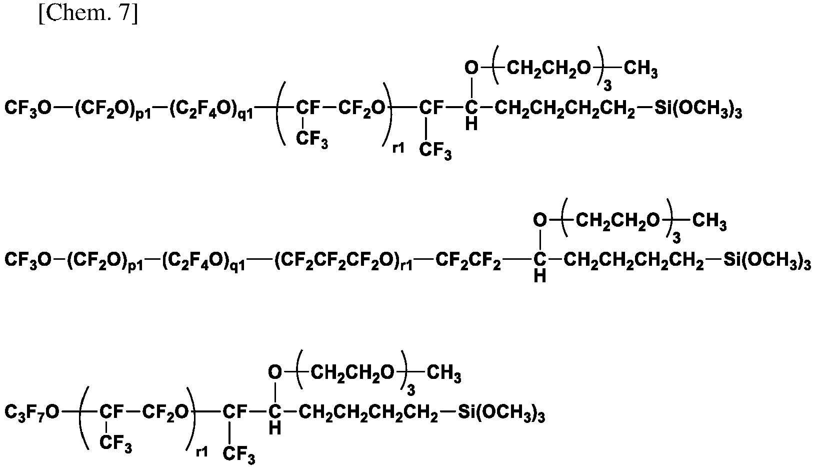 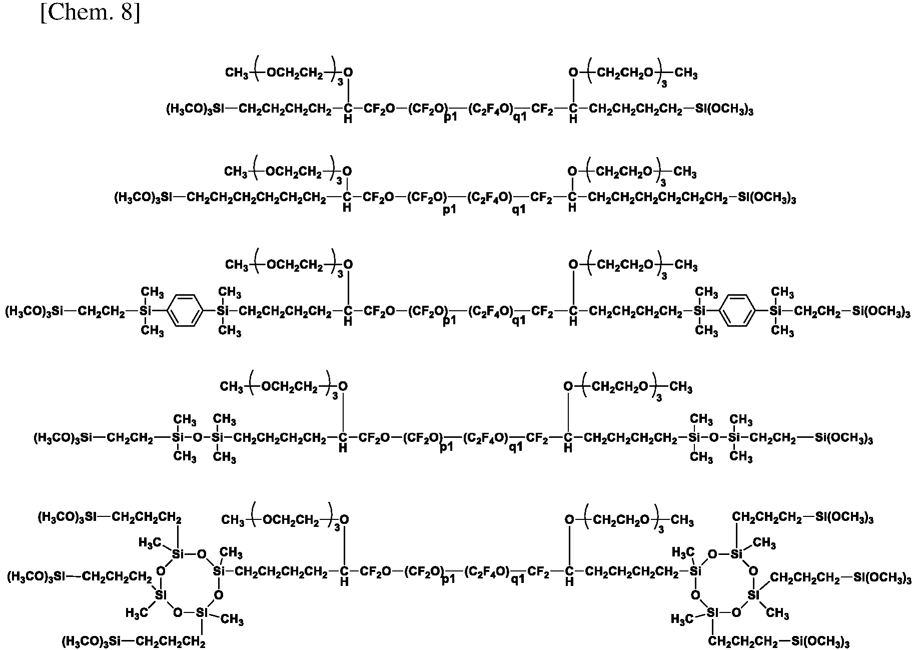 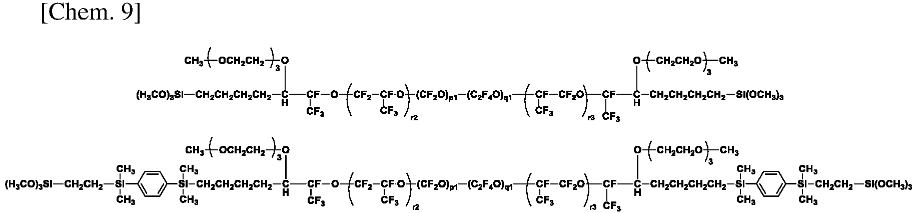 wherein p1 is an integer of 5 to 100, q1 is an integer of 5 to 100, r1 is an integer of 1 to 100, r2 is an integer of 1 to 99, r3 is an integer of 1 to 99, the sum of p1, q1, r1, r2 and r3 is an integer of 10 to 110, and individual repeating units within the parentheses with p1, q1, r1, r2, and r3 may be randomly bonded.

8. A surface treating agent comprising the fluoropolyether-containing polymer of any one of claims 1 to 7 and/or a partial (hydrolytic) condensate thereof.

9. The surface treating agent of claim 8 wherein the fluoropolyether group in the fluoropolyether-containing polymer is a monovalent fluorooxyalkylene-containing polymer residue at an end of the molecular chain.

10. An article having a surface treated with the surface treating agent of claim 8 or 9.

## Patentansprüche

1. Fluorpolyether-enthaltendes Polymer mit der folgenden allgemeinen Formel (1): 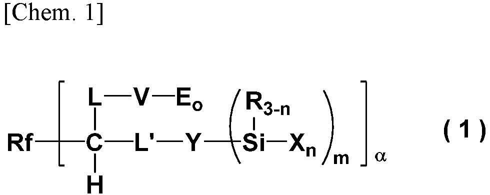 worin Rf ein ein- oder zweiwertiger Fluoroxyalkylen-enthaltender Polymerrest ist, L unabhängig ein zweiwertiges Heteroatom ist, L' unabhängig eine Einfachbindung oder ein zweiwertiges Heteroatom ist, Y unabhängig eine zwei- bis sechswertige Kohlenwasserstoffgruppe ist, die mindestens eines von einem Sauerstoffatom, einem Siliciumatom und einer Siloxanbindung enthalten kann, R unabhängig C₁-C₄-Alkyl oder Phenyl ist, X unabhängig eine Hydroxy- oder hydrolysierbare Gruppe ist, oder eine Gruppe mit der folgenden allgemeinen Formel (2): 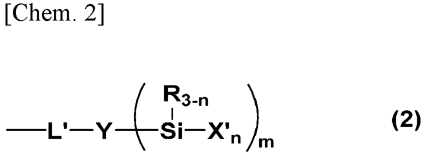 worin n unabhängig eine ganze Zahl von 1 bis 3 für jedes Siliciumatom ist, m unabhängig eine ganze Zahl von 1 bis 5 ist, X' eine Hydroxyl- oder hydrolysierbare Gruppe ist, V unabhängig eine Einfachbindung oder eine zwei- bis sechswertige Gruppe ist, ausgewählt aus einer Silalkylengruppe, einer Silarylengruppe, zwei- bis sechswertigen linearen Organopolysiloxanresten mit 2 bis 10 Siliciumatomen oder zwei- bis sechswertigen verzweigten oder cyclischen Organopolysiloxanresten mit 3 bis 10 Siliciumatomen, E unabhängig eine einwertige Polyethergruppe ist, o unabhängig eine ganze Zahl von 1 bis 5 ist und α 1 oder 2 ist.

2. Fluorpolyether-enthaltendes Polymer nach Anspruch **1,** wobei α in Formel (1) 1 ist und Rf eine Gruppe mit der folgenden allgemeinen Formel (3) ist: 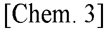 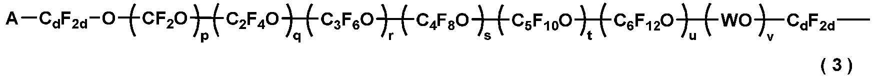 worin A Fluor, Wasserstoff oder eine Fluoralkylgruppe ist, die mit einer -CF₃-Gruppe endet, W unabhängig eine Fluoralkylengruppe ist, die mindestens ein Wasserstoffatom enthält, d j eweils unabhängig eine ganze Zahl von 1 bis 3 ist, p, q, r, s, t, u und v jeweils eine ganze Zahl von 0 bis 200 sind, p+q+r+s+t+u+v 3 bis 200 ist, jede der mit p, q, r, s, t, u und v assoziierten Einheiten linear oder verzweigt sein kann und einzelne Wiederholungseinheiten innerhalb der Klammern mit p, q, r, s, t, u und v statistisch gebunden sein können.

3. Fluorpolyether-enthaltendes Polymer nach Anspruch 1, wobei α in Formel (1) 2 ist und Rf eine Gruppe mit der folgenden allgemeinen Formel (4) ist: 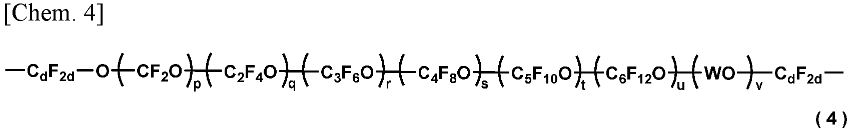 worin W unabhängig eine Fluoralkylengruppe ist, die mindestens ein Wasserstoffatom enthält, d jeweils unabhängig eine ganze Zahl von 1 bis 3 ist, p, q, r, s, t, u und v j eweils eine ganze Zahl von 0 bis 200 sind, p+q+r+s+t+u+v 3 bis 200 ist, jede der mit p, q, r, s, t, u und v assoziierten Einheiten linear oder verzweigt sein kann und einzelne Wiederholungseinheiten innerhalb der Klammern mit p, q, r, s, t, u und v statistisch gebunden sein können.

4. Fluorpolyether-enthaltendes Polymer nach einem der Ansprüche 1 bis 3, wobei in Formel (1) Y eine Gruppe ist, ausgewählt aus der Gruppe bestehend aus einer C₃-C₁₀-Alkylengruppe, einer C₆-C₈-Arylen enthaltenden Alkylengruppe, einer zweiwertigen Gruppe mit über eine Silalkylenstruktur oder Silarylenstruktur gebundenen Alkyleneinheiten, einer zwei- bis vierwertigen Gruppe mit einer C₂-C₁₀-Alkyleneinheit, die an die Valenzbindung eines zwei- bis vierwertigen linearen Organopolysiloxanrestes mit 2 bis 10 Siliciumatomen gebunden ist, oder einer zweibis vierwertigen Gruppe mit einer C₂-C₁₀-Alkyleneinheit, die an die Valenzbindung eines zwei- bis vierwertigen verzweigten oder cyclischen Organopolysiloxanrestes mit 3 bis 10 Siliciumatomen gebunden ist.

5. Fluorpolyether-enthaltendes Polymer nach einem der Ansprüche 1 bis 4, wobei E in Formel (1) eine Gruppe mit der folgenden allgemeinen Formel (5) ist: 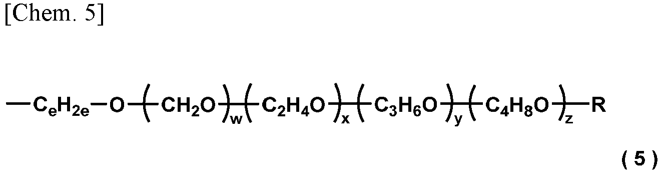 worin R C₁-C₄-Alkyl oder Phenyl ist, e eine ganze Zahl von 1 bis 4 ist, w, x, y und z jeweils eine ganze Zahl von 0 bis 30 sind, w+x+y+z 1 bis 50 ist, jede der mit w, x, y und z assoziierten Einheiten, linear oder verzweigt sein kann und einzelne Wiederholungseinheiten innerhalb der Klammem mit w, x, y und z zufällig gebunden sein können.

6. Fluorpolyether-enthaltendes Polymer nach einem der Ansprüche 1 bis 5, wobei in Formel (1) X jeweils unabhängig voneinander ausgewählt ist aus der Gruppe bestehend aus Hydroxy, einer C₁-C₁₀-Alkoxygruppe, einer C₂-C₁₀-Alkoxyalkoxygruppe, einer C₁-C₁₀-Acyloxygruppe, einer C₂-C₁₀-Alkenyloxygruppe und Halogen.

7. Fluorpolyether-enthaltendes Polymer nach einem der Ansprüche 1 bis 6, wobei das durch Formel (1) dargestellte Polymer aus den Polymeren mit den folgenden Formeln ausgewählt ist: 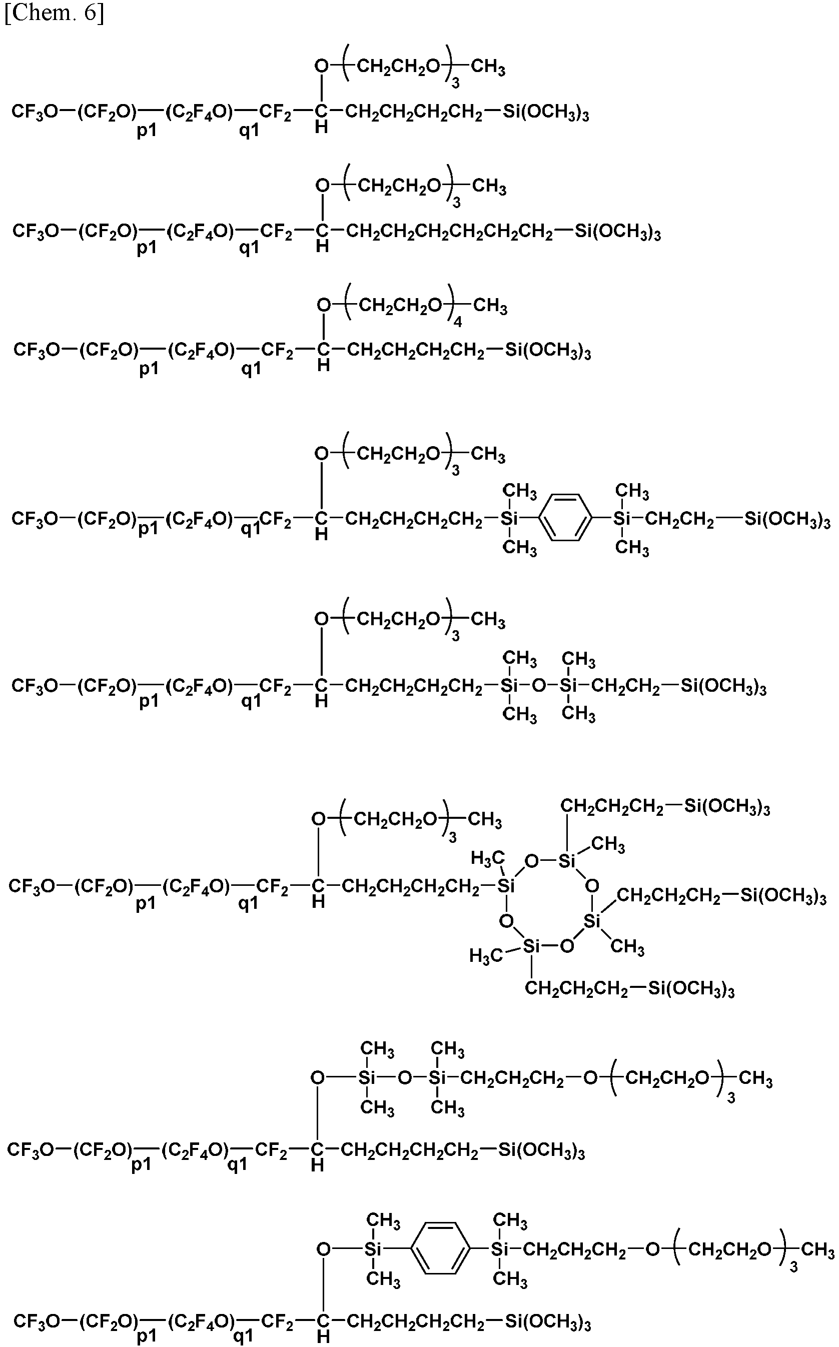 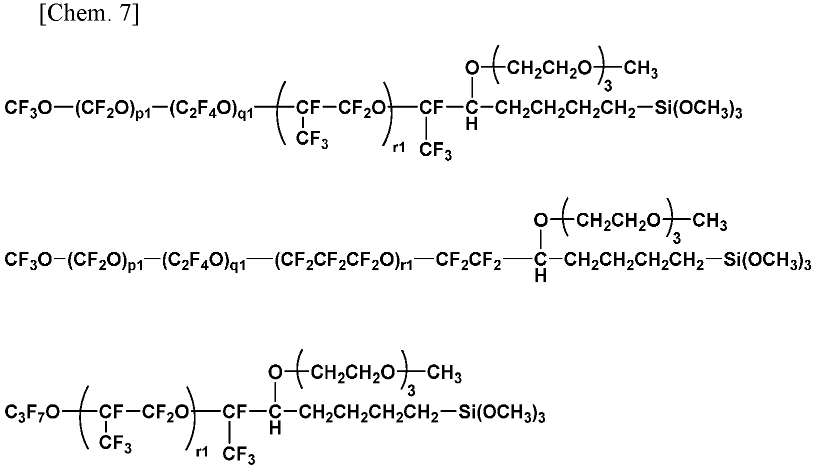 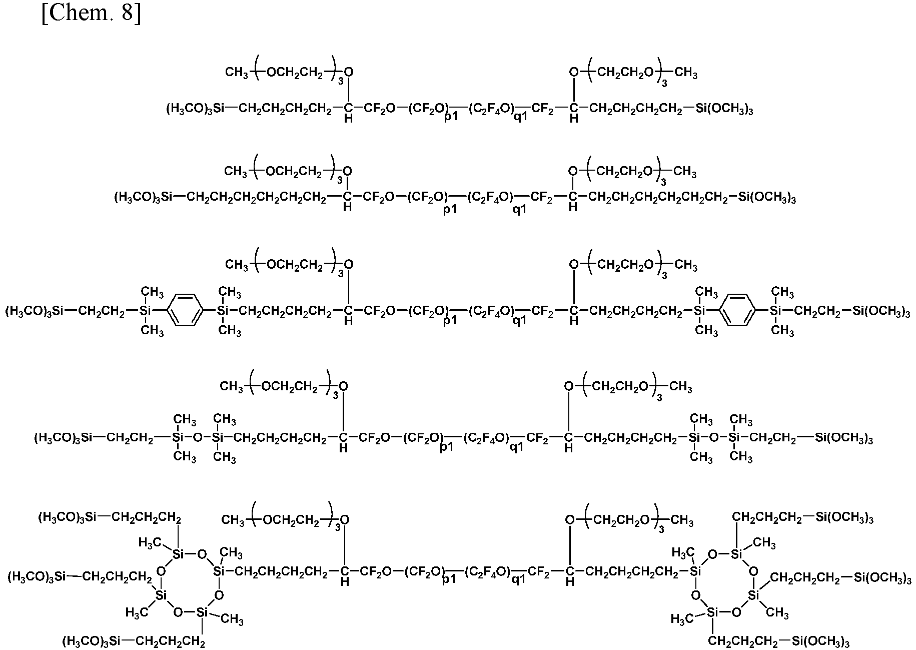 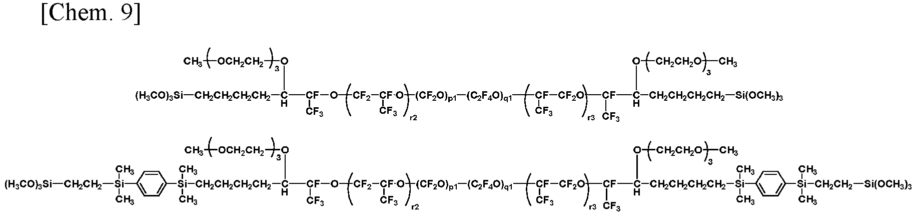 worin p1 eine ganze Zahl von 5 bis 100 ist, q1 eine ganze Zahl von 5 bis 100 ist, r1 eine ganze Zahl von 1 bis 100 ist, r2 eine ganze Zahl von 1 bis 99 ist, r3 eine ganze Zahl von 1 bis 99 ist, die Summe von p1, q1, r1, r2 und r3 eine ganze Zahl von 10 bis 110 ist und einzelne Wiederholungseinheiten innerhalb der Klammern mit p1, q1, r1, r2 und r3 zufällig gebunden sein können.

8. Oberflächenbehandlungsmittel, umfassend das Fluorpolyether-enthaltende Polymer nach einem der Ansprüche 1 bis 7 und/oder ein partielles (hydrolytisches) Kondensat davon.

9. Oberflächenbehandlungsmittel nach Anspruch 8, wobei die Fluorpolyethergruppe in dem Fluorpolyether-enthaltenden Polymer ein einwertiger Fluoroxyalkylen-enthaltender Polymerrest an einem Ende der Molekülkette ist.

10. Gegenstand mit einer mit dem Oberflächenbehandlungsmittel nach Anspruch 8 oder 9 behandelten Oberfläche.

## Revendications

1. Polymère contenant un fluoropolyéther ayant la formule générale (1) suivante : 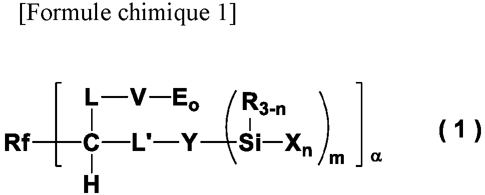 dans laquelle Rf est un résidu de polymère contenant un fluoro-oxyalkylène mono-ou divalent, L est indépendamment un hétéroatome divalent, L' est indépendamment une liaison simple ou un hétéroatome divalent, Y est indépendamment un groupe hydrocarbure di- à hexavalent qui peut contenir au moins un élément choisi parmi un atome d'oxygène, un atome de silicium et une liaison siloxane, R est indépendamment un alkyle ou un phényle en C₁ à C₄, X est indépendamment un groupe hydroxy ou un groupe hydrolysable, ou un groupe ayant la formule générale (2) suivante : 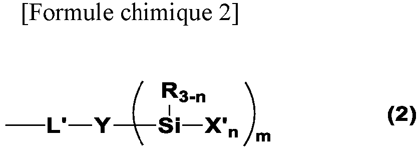 dans laquelle n est indépendamment un entier de 1 à 3 pour chaque atome de silicium, m est indépendamment un entier de 1 à 5, X' est un groupe hydroxyle ou un groupe hydrolysable, V est indépendamment une liaison simple ou un groupe di- à hexavalent choisi parmi un groupe silalkylène, un groupe silarylène, des résidus d'organopolysiloxane linéaires di- à hexavalents de 2 à 10 atomes de silicium ou des résidus d'organopolysiloxane ramifiés ou cycliques di- à hexavalents de 3 à 10 atomes de silicium, E est indépendamment un groupe polyéther monovalent, o est indépendamment un entier de 1 à 5, et α vaut 1 ou 2.

2. Polymère contenant un fluoropolyéther selon la revendication 1, dans lequel α dans la formule (1) vaut 1, et Rf est un groupe ayant la formule générale (3) suivante : 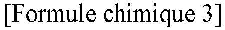 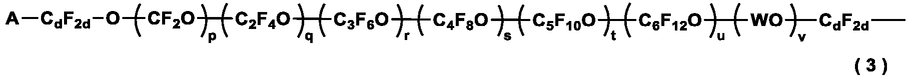 dans laquelle A est le fluor, l'hydrogène ou un groupe fluoroalkyle terminé par un groupe -CF₃, W est indépendamment un groupe fluoroalkylène contenant au moins un atome d'hydrogène, chaque d est indépendamment un entier de 1 à 3, p, q, r, s, t, u et v sont chacun un entier de 0 à 200, p+q+r+s+t+u+v vaut de 3 à 200, chacun des motifs associés à p, q, r, s, t, u et v peut être linéaire ou ramifié, et des motifs répétés individuels entre les parenthèses avec p, q, r, s, t, u et v peuvent être liés de façon aléatoire.

3. Polymère contenant un fluoropolyéther selon la revendication 1, dans lequel α dans la formule (1) vaut 2, et Rf est un groupe ayant la formule générale (4) suivante : 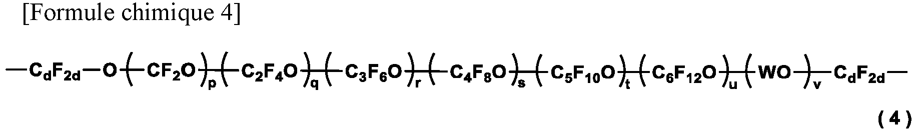 dans laquelle W est indépendamment un groupe fluoroalkylène contenant au moins un atome d'hydrogène, chaque d est indépendamment un entier de 1 à 3, p, q, r, s, t, u et v sont chacun un entier de 0 à 200, p+q+r+s+t+u+v v vaut de 3 à 200, chacun des motifs associés à p, q, r, s, t, u et v peut être linéaire ou ramifié, et des motifs répétés individuels entre les parenthèses avec p, q, r, s, t, u et v peuvent être liés de façon aléatoire.

4. Polymère contenant un fluoropolyéther selon l'une quelconque des revendications 1 à 3, dans lequel dans la formule (1), Y est un groupe choisi parmi le groupe constitué d'un groupe alkylène en C₃ à C₁₀, un groupe alkylène contenant un arylène en C₆ à C₈, un groupe divalent ayant des groupements alkylène liés via une structure silalkylène ou une structure silarylène, un groupe di- à tétravalent ayant un groupement alkylène en C₂ à C₁₀ lié à la liaison de valence d'un résidu d'organopolysiloxane linéaire di- à tétravalent de 2 à 10 atomes de silicium ou un groupe di- à tétravalent ayant un groupement alkylène en C₂ à C₁₀ lié à la liaison de valence d'un résidu d'organopolysiloxane ramifié ou cyclique di- à tétravalent de 3 à 10 atomes de silicium.

5. Polymère contenant un fluoropolyéther selon l'une quelconque des revendications 1 à 4, dans lequel E dans la formule (1) est un groupe ayant la formule générale (5) suivante : 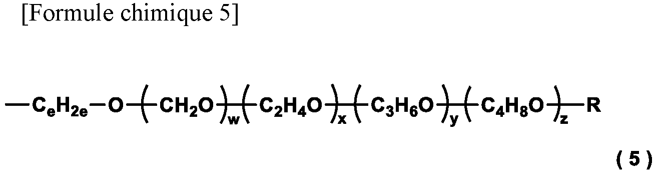 dans laquelle R est un alkyle ou un phényle en C₁ à C₄, e est un entier de 1 à 4, w, x, y et z sont chacun un entier de 0 à 30, w+x+y+z vaut de 1 à 50, chacune des motifs associés à w, x, y et z peut être linéaire ou ramifié, et des motifs répétés individuels entre les parenthèses avec w, x, y et z peuvent être liés de façon aléatoire.

6. Polymère contenant un fluoropolyéther selon l'une quelconque des revendications 1 à 5, dans lequel dans la formule (1), chaque X est choisi indépendamment parmi le groupe constitué d'un hydroxy, d'un groupe alcoxy en C₁ à C₁₀, d'un groupe alcoxyalcoxy en C₂ à C₁₀, d'un groupe acyloxy en C₁ à C₁₀, d'un groupe alcényloxy en C₂ à C₁₀ et d'un halogène.

7. Polymère contenant un fluoropolyéther selon l'une quelconque des revendications 1 à 6, dans lequel le polymère représenté par la formule (1) est choisi parmi les polymères ayant les formules suivantes : 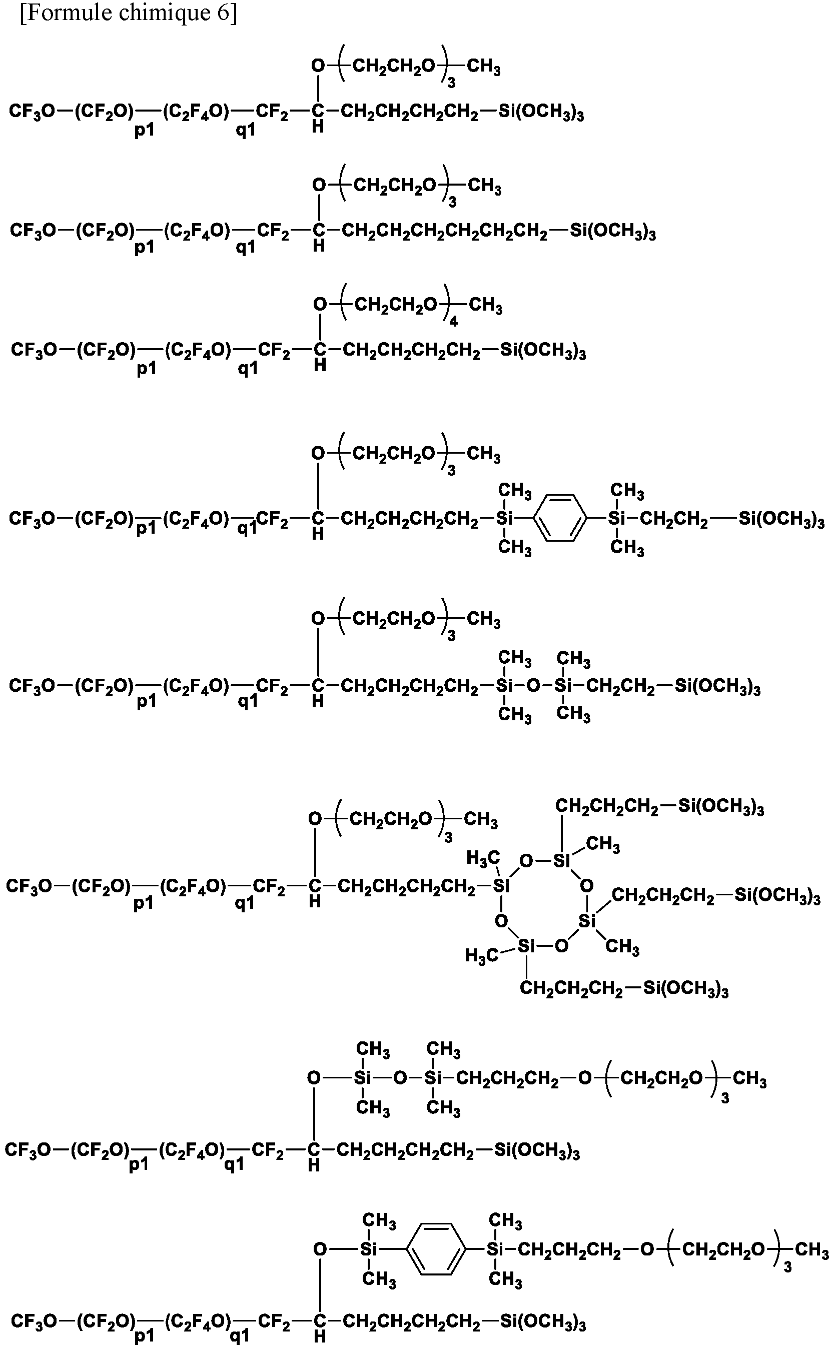 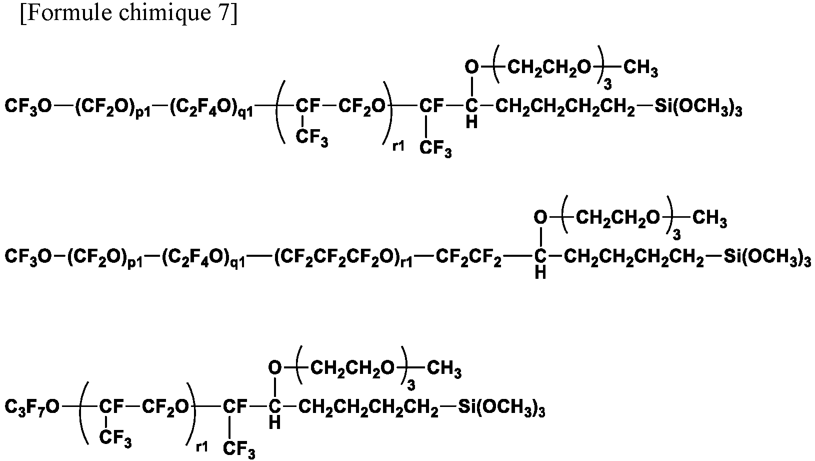 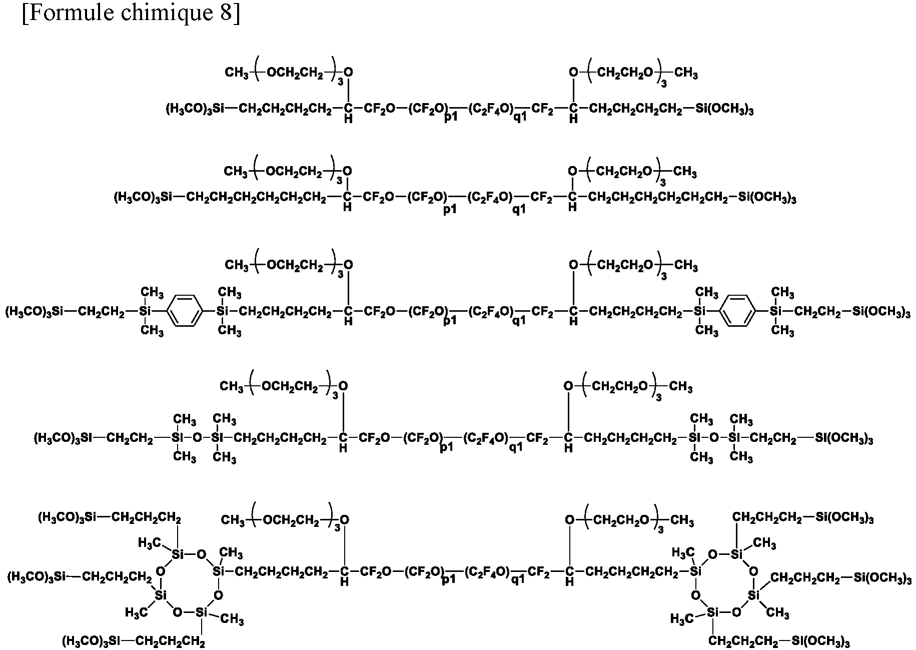 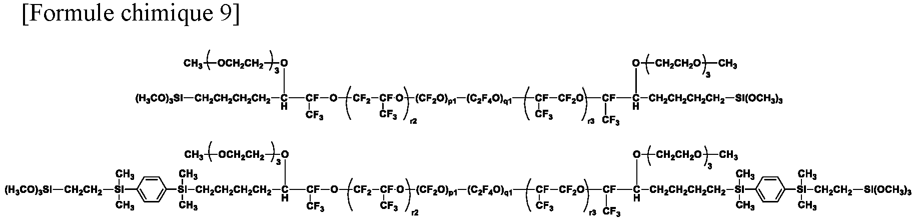 dans lesquelles p1 est un entier de 5 à 100, q1 est un entier de 5 à 100, r1 est un entier de 1 à 100, r2 est un entier de 1 à 99, r3 est un entier de 1 à 99, la somme de p1, q1, r1, r2 et r3 est un entier de 10 à 110, et des motifs répétés individuels entre les parenthèses avec p1, q1, r1, r2 et r3 peuvent être liés de façon aléatoire.

8. Agent de traitement de surface comportant le polymère contenant un fluoropolyéther de l'une quelconque des revendications 1 et 7 et/ou un condensat (hydrolytique) partiel de celui-ci.

9. Agent de traitement de surface selon la revendication 8, dans lequel le groupe fluoropolyéther dans le polymère contenant un fluoropolyéther est un résidu de polymère contenant un fluoro-oxyalkylène monovalent à une extrémité de la chaîne moléculaire.

10. Article ayant été traité en surface avec l'agent de traitement de surface de la revendication 8 ou 9.
